# EUROPÄISCHE PATENTSCHRIFT

(11) **EP 3 503 986 B1**
(45) Veröffentlichungstag und Bekanntmachung des Hinweises auf die Patenterteilung: **01.09.2021**
(21) Anmeldenummer: 17758841.5
(22) Anmeldetag: 21.08.2017
(51) Int. Cl.: B01D 33/073, B01D 33/46, B01D 33/60

(54) **VAKUUM- UND/ODER DRUCK-TROMMELFILTERVORRICHTUNG**
VACUUM AND/OR PRESSURE DRUM FILTER DEVICE
DISPOSITIF DE FILTRAGE À TAMBOUR SOUS PRESSION ET/OU VIDE

(30) Priorität: 23.08.2016 DE 102016115577
(43) Veröffentlichungstag der Anmeldung: 03.07.2019
(73) Patentinhaber: ANDRITZ Separation GmbH, 85256 Vierkirchen (DE)
(72) Erfinder: KNOBLOCH, Wolfgang, 82327 Tutzing-Unterzeismering (DE)
(74) Vertreter: Viering, Jentschura & Partner mbB Patent- und Rechtsanwälte
(86) Internationale Anmeldenummer: PCT/EP2017/071050
(87) Internationale Veröffentlichungsnummer: WO 2018/036973

(56) Entgegenhaltungen:
- DE-A1- 3 942 725
- GB-A- 1 406 690
- GB-A- 2 114 014
- US-A- 2 131 303
- US-A- 2 484 304
- US-A- 3 487 941
- US-A- 3 592 341

## Beschreibung

Die vorliegende Erfindung betrifft eine Vakuum- und/oder Druck-Trommelfiltervorrichtung zum Filtern eines Feststoffmaterials aus einer Suspension.

Trommelfiltervorrichtungen werden z.B. bei chemischen, pharmazeutischen und biologischen Anwendungen im industriellen Maßstab zur Filtration von Suspensionen (Fest-Flüssig-Gemischen) eingesetzt. Herkömmliche Trommelfiltervorrichtungen weisen eine drehbare Filtertrommel, die um ihre Horizontal-Längsachse drehbar ist, und eine Wanne zur Aufnahme der zu filtrierenden Suspension auf, in die die Filtertrommel teilweise eintaucht. An der Mantelfläche der Filtertrommel sind Filterzellen angeordnet, an die Filtrat-Rohre zum Abführen des Filtrats (flüssige Phase der Suspension) angeschlossen sind. Die zu filtrierende Suspension wird den Filterzellen von außerhalb der Filtertrommel zugeführt. Durch ein Filtermedium hindurch wird das Filtrat an die Filtrat-Rohre abgegeben, während ein Filterkuchen in/an den Filterzellen verbleibt. Das Abgeben des Filtrats erfolgt über eine Druckdifferenz, entweder durch Beaufschlagen der Suspension mit Druck (Druck-Trommelfiltervorrichtung) und/oder durch Beaufschlagen der Filtrat-Rohre bzw. der Filterzellen mit Vakuum (Vakuum-Trommelfiltervorrichtung).

Herkömmliche Druck-Trommelfiltervorrichtungen weisen einen Druckbehälter als Gehäuse auf, in welchem die Filtertrommel und die Wanne angeordnet sind, um die Suspension mit Druck zu beaufschlagen. Auch Vakuum-Trommelfiltervorrichtungen können ein Gehäuse aufweisen, um Kontamination der Suspension bzw. des Filterkuchens mit Umgebungsluft zu verhindern oder um Kontamination der Umgebungsluft mit Dämpfen der Flüssigkeit der Suspension zu verhindern. An dem Gehäuse ist eine Gasleitung zum Zuführen eines Gases angeschlossen. Durch Zuführen des Gases kommt es im Inneren des Gehäuses zu Turbulenzen, die dazu führen, dass Dämpfe der Flüssigkeit der Suspension im Inneren des Gehäuses verwirbelt werden. Der Filterkuchen wird zum Beispiel durch ein Schälmesser und durch mit Druck Beaufschlagen der Filterzellen von der Filtertrommel entfernt, und wird dann aus dem Gehäuse abgeführt. Aufgrund der Turbulenzen und der Dämpfe der Flüssigkeit der Suspension, die dadurch im Inneren des Gehäuses verwirbelt werden, kann der filtrierte Feststoff mit den Dämpfen der Flüssigkeit der Suspension kontaminiert werden.

DE 1299281 A offenbart eine Kuchenabnahme-Vorrichtung zum Ablösen einer Fasermatte von einem Trommeldrehfilter zum Entwässern von Suspensionen mittels eines zwischen die Fasermatte und die Trommelmantelfläche des Drehfilters geführten gasförmigen Mediums und eines mit geringem Abstand von der Filterfläche sich in Umdrehungsrichtung auf der abwärts gerichteten Seite der Trommel erstreckenden Abstreifers. JP 2000-246024 A offenbart eine Schwebstoff-Filterbehandlungsvorrichtung. Aus der US 2 484 304 A sind ein Verfahren zum Entwachsen von Öl sowie ein kontinuierlich drehender Filter hierfür bekannt, wobei ein Lösungsspray über eine Leitung auf einen Drehfilter gesprüht wird. Aus der US 2131 303 A sind ein Verfahren und eine Vorrichtung zum Entfernen von Wachs von Drehfiltern bekannt. Die GB 1 406 690 A offenbart eine Vorrichtung zum Entfernen von Wasser von einem Feinpartikelmaterial.

Durch die Erfindung wird eine Vakuum- und/oder Druck-Trommelfiltervorrichtung zum Filtern eines Feststoffmaterials aus einer Suspension geschaffen, die im Hinblick auf eine Kontamination des gefilterten Feststoffmaterials mit Dämpfen der Flüssigkeit der Suspension verbessert ist.

Hierzu stellt die vorliegende Erfindung eine Vakuum- und/oder Druck-Trommelfiltervorrichtung zum Filtern eines Feststoffmaterials aus einer Suspension gemäß Anspruch 1 bereit. Weitere Ausgestaltungen der erfindungsgemäßen Vakuum- und/oder Druck-Trommelfiltervorrichtung sind in den abhängigen Ansprüchen beschrieben.

Gemäß verschiedenen Aspekten der vorliegenden Erfindung hat eine Vakuum- und/oder Druck-Trommelfiltervorrichtung zum Filtern eines Feststoffmaterials aus einer Suspension, die von dem Feststoffmaterial und einer Flüssigkeit gebildet ist, ein Vorrichtungsgehäuse, eine (zum Beispiel in eine Filterbetriebsdrehrichtung) drehbare Filtertrommel, welche eine Filtertrommellängsachse definiert und welche im Vorrichtungsgehäuse angeordnet ist, eine Gaszuführleitung zur Zuführung eines Gases in das Vorrichtungsgehäuse und ein Schälmesser (zum Beispiel zum Abschälen eines (zum Beispiel zumindest im Wesentlichen aus dem gefilterten Feststoffmaterial geformten) Filterkuchens von der Filtertrommel). Die Vakuum- und/oder Druck-Trommelfiltervorrichtung kann zum Beispiel eine Antriebseinrichtung zum drehbaren Betreiben der Filtertrommel aufweisen, welche optional im Vorrichtungsgehäuse angeordnet sein kann. Die Vakuum- und/oder Druck-Trommelfiltervorrichtung weist eine Gaszuführvorrichtung zum Zuführen eines/des Gases in die Gaszuführleitung auf. Die Filtertrommel kann zum Beispiel zylinderförmig sein.

Die Filtertrommel kann zum Beispiel eine Filterfläche von größer gleich 0,1 m² oder größer gleich 10 m² oder größer gleich 100 m² aufweisen. Die Gaszuführleitung kann zum Beispiel ein Rohr oder ein Schlauch sein. Das Vorrichtungsgehäuse kann zum Beispiel ein (zum Beispiel im Wesentlichen zylinderförmiger) Druckbehälter sein, welcher optional mit einem Betriebsdruck von kleiner gleich 5 bar oder kleiner gleich 10 bar betreibbar ist.

Im Sinne dieser Anmeldung beschreibt der Ausdruck "im Wesentlichen" die in der Technik auftretenden Toleranzen. Im Sinne dieser Anmeldung umfasst der Ausdruck "zumindest im Wesentlichen" die genannte Größe bzw. Form bzw. Eigenschaft und die in der Technik auftretenden Toleranzen.

Die Gaszuführleitung ist mit einer ersten Gasaustrittseinrichtung versehen, die eine oder mehrere Gasaustrittsöffnungen aufweist, welche sich entlang der Filtertrommellängsachse erstreckend ausgebildet ist/sind und aus der/denen das Gas in das Vorrichtungsgehäuse hinein austritt. Die eine oder mehreren Gasaustrittsöffnungen sind radial außerhalb der Filtertrommel und auf einer von der Filtertrommel abgewandten Seite des Schälmessers angeordnet (sodass das Gas über die Gasaustrittsöffnung/en radial außerhalb (bezüglich der Filtertrommel) eines (außen) auf der Filtertrommel anhaftenden und/oder auf dem Schälmesser im Rahmen eines Schäl-Vorgangs vorliegenden Filterkuchens zuführbar ist). Die eine oder mehreren Gasaustrittsöffnungen kann/können sich zum Beispiel zumindest im Wesentlichen parallel zur Filtertrommellängsachse erstrecken. Die Gaszuführleitung und/oder die eine oder mehreren Gasaustrittsöffnungen können zum Beispiel radial außerhalb der Filtertrommel und auf einer von der Filtertrommel abgewandten Seite eines/des (zum Beispiel zumindest im Wesentlichen aus dem gefilterten Feststoffmaterial geformten) Filterkuchens, der außen an der Filtertrommel anhaftet und/oder der im Rahmen des Schäl-Vorgangs auf dem Schälmesser vorliegt, angeordnet sein. Das Schälmesser erstreckt sich z.B. im Querschnitt quer zur Filtertrommellängsachse gesehen entlang einer entsprechenden Schälmesser-Quererstreckungsrichtung ausgehend von einem benachbart (z.B. nahe) der Filtertrommel angeordneten Schälmesser-Ende (z.B. Schälmesser-Klingenende) in Richtung zu einer Feststoffmaterial-Aufnahmevorrichtung (z.B. einem Feststoffmaterial-Aufnahmebehälter), wobei das Schälmesser quer zu dieser Schälmesser-Quererstreckungsrichtung die von der Filtertrommel abgewandte Seite (welche z.B. eine von der Filtertrommel abgewandte Schälmesserfläche ist), und eine der Filtertrommel zugewandte Seite (welche z.B. eine der Filtertrommel zugewandte Schälmesserfläche ist) definiert. Das Schälmesser kann zum Beispiel eine (z.B. die) Schälmesserfläche definieren, die sich zumindest im Wesentlichen parallel zur Filtertrommellängsachse erstreckt, und die Gaszuführleitung und/oder die eine oder mehreren Gasaustrittsöffnungen können zum Beispiel radial außerhalb der Filtertrommel und auf einer von der Filtertrommel abgewandten Seite der Schälmesserfläche angeordnet sein.

Die Gaszuführleitung kann optional langgestreckt sein. Die Gaszuführleitung kann optional eine Leitungslängsachse definieren und kann im Vorrichtungsgehäuse radial außerhalb der Filtertrommel angeordnet sein und kann sich mit ihrer Leitungslängsachse zumindest im Wesentlichen parallel zu der Filtertrommellängsachse erstrecken. Die Gaszuführleitung kann zum Beispiel auf einer von der Filtertrommel abgewandten Seite des Schälmessers angeordnet sein. Die eine oder mehreren Gasaustrittsöffnungen (der ersten Gasaustrittseinrichtung der Gaszuführleitung) können optional sich entlang der Leitungslängsachse der Gaszuführleitung erstreckend ausgebildet sein.

Die Gaszuführleitung kann optional von außen zu einer Gehäuseumfangswand des Vorrichtungsgehäuses geführt sein und kann sich optional durch die Gehäuseumfangswand hindurch erstrecken. Die Gaszuführleitung kann zum Beispiel zumindest größtenteils außerhalb des Vorrichtungsgehäuses angeordnet sein.

Die (erste) Gasaustrittseinrichtung (der Gaszuführleitung) kann optional mit ihrer einen oder ihren mehreren Gasaustrittsöffnungen benachbart zu oder in der Gehäuseumfangswand des Vorrichtungsgehäuses ausgebildet sein.

Im Sinne dieser Anmeldung beschreibt der Ausdruck "benachbart" die räumliche Nähe zweier Objekte bzw. Gegenstände. Im Sinne dieser Anmeldung kann der Ausdruck "benachbart" zum Beispiel einen Abstand von kleiner gleich 100 cm, kleiner gleich 80 cm, kleiner gleich 60 cm, kleiner gleich 40 cm, kleiner gleich 20 cm, kleiner gleich 10 cm oder kleiner gleich 5 cm umfassen.

Die Gaszuführleitung kann optional eine Leitungslängsachse definieren, welche sich quer zur Filtertrommellängsachse erstreckt, zum Beispiel in einem Winkel von größer 0° und kleiner gleich 90° zur Filtertrommellängsachse. Die Gaszuführleitung kann optional entlang ihrer Leitungslängsachse mit einer sich parallel zu der Filtertrommellängsachse erfolgenden, optional trichterförmigen, Verbreiterung ausgebildet sein, welche in der (ersten) Gasaustrittseinrichtung ausmündet. Die (erste) Gasaustritteinrichtung kann optional von einer stirnseitigen, parallel zu der Filtertrommellängsachse langgestreckten und sich erstreckenden Stirnendfläche der Verbreiterung gebildet sein, in welcher Stirnendfläche die eine oder die mehren Gasaustrittsöffnungen ausgebildet sind. Optional kann von der besagten Stirnendfläche der Verbreiterung eine einzige in das Vorrichtungsgehäuse hinein offene Gasaustrittsöffnung ausgebildet sein, welche parallel zu der Filtertrommellängsachse sowohl langgestreckt ist als auch sich erstreckt.

Die Gaszuführleitung kann sich zum Beispiel entlang von größer gleich 80% oder größer gleich 90% der gesamten Länge der Filtertrommel in Richtung der Filtertrommellängsachse erstrecken. Die eine oder die mehreren Gasaustrittsöffnungen der ersten Gasaustrittseinrichtung kann/können sich zum Beispiel entlang von größer gleich 80% oder größer gleich 90% der gesamten Länge der Filtertrommel in Richtung der Filtertrommellängsachse erstrecken. Die erste Gasaustrittseinrichtung kann zum Beispiel von bezüglich der Filtertrommellängsachse und/oder der Leitungslängsachse radial ausgebildeten Löchern (zum Beispiel Rundlöchern) gebildet sein, die entlang der Filtertrommellängsachse und/oder der Leitungslängsachse im Abstand voneinander angeordnet sind. Die erste Gasaustrittseinrichtung kann zum Beispiel von parallel zur Filtertrommellängsachse und/oder der Leitungslängsachse verlaufenden Längsschlitzen gebildet sein, die entlang der Filtertrommellängsachse und/oder der Leitungslängsachse im Abstand voneinander angeordnet sind. Die erste Gasaustrittseinrichtung kann zum Beispiel von Längsschlitzen gebildet sein, die in einer Ebene orthogonal zur Filtertrommellängsachse und/oder der Leitungslängsachse verlaufen und die entlang der Filtertrommellängsachse und/oder der Leitungslängsachse im Abstand voneinander angeordnet sind. Die erste Gasaustrittseinrichtung kann zum Beispiel von einer Kombination der oben genannten Arten von Gasaustrittsöffnungen gebildet sein.

Die Gaszuführleitung kann optional mit einer zweiten Gasaustrittseinrichtung versehen sein, die eine oder mehrere Gasaustrittsöffnungen aufweist, welche sich entlang der Leitungslängsachse erstreckend ausgebildet sind und aus denen das Gas in das Vorrichtungsgehäuse hinein austritt. Die eine oder die mehreren Gasaustrittsöffnungen der zweiten Gasaustrittseinrichtung können zum Beispiel wie die vorstehend beschriebenen Gasaustrittsöffnungen der ersten Gasaustrittseinrichtung ausgebildet sein.

Die Gaszuführleitung kann sich optional zumindest im Wesentlichen entlang der gesamten Länge der Filtertrommel erstrecken. Die eine oder die mehreren Gasaustrittsöffnungen der jeweiligen (bzw. der ersten und/oder der zweiten) Gasaustrittseinrichtung können sich optional zumindest im Wesentlichen entlang der gesamten Länge der Filtertrommel erstrecken.

Die Vakuum- und/oder Druck-Trommelfiltervorrichtung kann optional ein Suspensionsaufnahmebecken aufweisen, in welchem die Suspension angeordnet ist. Das Suspensionsaufnahmebecken kann zum Beispiel in dem Vorrichtungsgehäuse angeordnet sein. Das Suspensionsaufnahmebecken kann zum Beispiel ein Teil des Vorrichtungsgehäuses sein. Die Filtertrommellängsachse kann optional horizontal angeordnet sein. Die Filtertrommel kann optional mit einem unteren Abschnitt von ihr durch eine Öffnung des Suspensionsaufnahmebeckens hindurch in das Suspensionsaufnahmebecken eingreifen, sodass eine Außenfläche der Filtertrommel im Rahmen der Drehung der Filtertrommel (zum Beispiel in Filterbetriebsdrehrichtung) an einem ersten Vorrichtungsbereich fortlaufend in das Suspensionsaufnahmebecken hinein gelangen kann (bzw. hinein gelangt) und an einem zweiten Vorrichtungsbereich fortlaufend aus dem Suspensionsaufnahmebecken heraus gelangen kann (bzw. heraus gelangt). Die Gaszuführleitung kann optional benachbart zu dem ersten Vorrichtungsbereich angeordnet sein. Die Gaszuführleitung kann zum Beispiel an/in einem Bereich der Vakuum- und/oder Druck-Trommelfiltervorrichtung angeordnet sein, der dem ersten Vorrichtungsbereich (räumlich) näher ist als dem zweiten Vorrichtungsbereich.

Optional kann zumindest eine Anzahl oder alle von der einen oder den mehreren Gasaustrittsöffnungen der jeweiligen (bzw. der ersten und/oder der zweiten) Gasaustrittseinrichtung zumindest im Wesentlichen tangential zur Filtertrommel ausgerichtet sein, sodass das Gas zumindest im Wesentlichen tangential bezüglich der Filtertrommel strömend aus dieser Anzahl von oder allen Gasaustrittsöffnungen der jeweiligen (bzw. der ersten und/oder der zweiten) Gasaustrittseinrichtung austreten kann.

Optional kann zumindest eine Anzahl oder alle von der einen oder den mehreren Gasaustrittsöffnungen der jeweiligen (bzw. der ersten und/oder der zweiten) Gasaustrittseinrichtung radial zumindest im Wesentlichen auf die Filtertrommellängsachse ausgerichtet sein, sodass das Gas, zumindest im Wesentlichen radial in Richtung auf die Filtertrommellängsachse gerichtet aus dieser Anzahl von oder allen Gasaustrittsöffnungen der jeweiligen (bzw. der ersten und/oder der zweiten) Gasaustrittseinrichtung austreten kann.

Optional können die eine oder die mehreren Gasaustrittsöffnungen der jeweiligen (bzw. der ersten und/oder der zweiten) Gasaustrittseinrichtung zumindest im Wesentlichen auf bzw. entlang einer geraden Linie liegend ausgebildet sein, weiche zumindest im Wesentlichen parallel zu der Filtertrommellängsachse und/oder der Leitungslängsachse verläuft.

Optional kann die jeweilige (bzw. die erste und/oder die zweite) Gasaustrittseinrichtung von einem (zum Beispiel einzigen) Längsschlitz mit einer (zum Beispiel einzigen) Schlitzöffnung als Gasaustrittsöffnung gebildet sein, welche sich zumindest im Wesentlichen entlang der gesamten Länge der Filtertrommel erstreckt und welche zumindest im Wesentlichen parallel zu der Filtertrommellängsachse und/oder der Leitungslängsachse verläuft.

Optional kann die zweite Gasaustrittseinrichtung bezüglich der Leitungslängsachse (bzw. um diese herum gesehen) in einem Winkelabstand von größer als 90°, zum Beispiel größer als 120° oder größer als 150°, und optional von kleiner als 180°, zum Beispiel kleiner als 170°, zu der ersten Gasaustrittseinrichtung angeordnet sein.

Optional können die eine oder die mehreren Gasaustrittsöffnungen der ersten Gasaustrittseinrichtung radial zumindest im Wesentlichen auf die Filtertrommellängsachse ausgerichtet sein, sodass das Gas, zumindest im Wesentlichen radial in Richtung auf die Filtertrommellängsachse gerichtet aus der einen oder den mehreren Gasaustrittsöffnungen der ersten Gasaustrittseinrichtung austreten kann. Optional können die eine oder die mehreren Gasaustrittsöffnungen der zweiten Gasaustrittseinrichtung zumindest im Wesentlichen orthogonal zu einem Abschnitt der/einer vom Vorrichtungsgehäuse definierten Gehäuseinnenfläche ausgerichtet sein, welcher Abschnitt der Gehäuseinnenfläche der einen oder den mehreren Gasaustrittsöffnungen der zweiten Gasaustrittseinrichtung räumlich am nächsten ist, sodass das Gas zumindest im Wesentlichen orthogonal zu diesem Abschnitt der Gehäuseinnenfläche des Vorrichtungsgehäuses aus der einen oder den mehreren Gasaustrittsöffnungen der zweiten Gasaustrittseinrichtung austreten kann.

Optional kann die Vakuum- und/oder Druck-Trommelfiltervorrichtung Leitfinnen aufweisen, welche jeweils eine Finnenfläche definieren und welche an und/oder benachbart zu der einen oder den mehreren Gasaustrittsöffnungen der jeweiligen (bzw. der ersten und/oder der zweiten) Gasaustrittseinrichtung angeordnet sein können und welche sich mit ihrer Finnenfläche quer zur Filtertrommellängsachse und/oder Leitungslängsachse erstrecken können, um das aus den Gasaustrittsöffnungen austretende Gas in Richtung quer zur Filtertrommellängsachse und/oder Leitungslängsachse zu leiten. Die Finnenflächen können eben sein oder gekrümmt sein. Die Finnenflächen können glatt sein oder rau sein. Die Finnenflächen können sich mit einem gleichen Winkel oder mit verschiedenen Winkeln quer zur Leitungslängsachse erstrecken. Die Finnenflächen können sich zum Beispiel in einem Winkel von größer 0° und kleiner gleich 90° quer zur Filtertrommellängsachse und/oder Leitungslängsachse erstrecken. Die Finnenflächen können sich zum Beispiel in einem Winkel von 15° bis 90° oder von 30° bis 90° oder von 45° bis 90° oder von 60° bis 90° oder von 80° bis 90° quer zur Filtertrommellängsachse und/oder Leitungslängsachse erstrecken. Die Finnenflächen können sich zum Beispiel zumindest im Wesentlichen orthogonal zur Filtertrommellängsachse und/oder Leitungslängsachse erstrecken, um das aus den Gasaustrittsöffnungen austretende Gas in Richtung zumindest im Wesentlichen orthogonal zur Filtertrommellängsachse und/oder Leitungslängsachse zu leiten. Die Größe der Finnenflächen kann gleich sein oder verschieden sein. Die Größe der Finnenfiächen kann zum Beispiel entlang der Filtertrommellängsachse und/oder Leitungslängsachse der Gaszuführleitung ausgehend von einer Eintrittsstelle der Gaszuführleitung in das Vorrichtungsgehäuse (zum Beispiel graduell) abnehmen. Hierbei kann zum Beispiel die Größe der Finnenfläche einer Leitfinne, die an/in einem Bereich der Gasaustrittseinrichtung angeordnet ist, in dem der Gasstrom verhältnismäßig größer ist, größer sein, als die Größe der Finnenfläche einer Leitfinne, die an/in einem Bereich der Gasaustrittseinrichtung angeordnet ist, in dem der Gasstrom verhältnismäßig kleiner ist. Es können zum Beispiel größer gleich 10 oder größer gleich 20 oder größer gleich 30 oder größer gleich 40 Leitfinnen vorgesehen sein. Es können zum Beispiel kleiner gleich 30 oder kleiner gleich 40 oder kleiner gleich 50 oder kleiner gleich 60 Leitfinnen vorgesehen sein.

Die Vakuum- und/oder Druck-Trommelfiltervorrichtung kann optional Umfangsleitbleche aufweisen, welche sich in Umfangsrichtung der Filtertrommel benachbart zur Außenfläche der Filtertrommel erstrecken und welche entlang der Filtertrommellängsachse im Abstand voneinander angeordnet sind und welche jeweils eine Umfangsleitblechfläche definieren, die sich quer zur Filtertrommellängsachse erstreckt. Die Umfangsleitbleche können im Vorrichtungsgehäuse drehfest sowie optional jeweilig benachbart zu einem jeweils zugeordneten Längsende der Filtertrommel angeordnet sein. Die Umfangsleitbleche können zum Beispiel an dem Suspensionsaufnahmebecken und/oder der Gaszuführleitung befestigt sein. Die Umfangsleitblechflächen können zum Beispiel eben sein oder gekrümmt sein. Die Umfangsleitblechflächen können sich zum Beispiel zumindest im Wesentlichen orthogonal zur Filtertrommellängsachse erstrecken. Die Umfangsleitbleche können zum Beispiel aus Metall und/oder Kunststoff gemacht sein.

Die Vakuum- und/oder Druck-Trommelfiltervorrichtung kann optional eine Abdeckvorrichtung aufweisen, welche einen Bereich der Öffnung des Suspensionsaufnahmebeckens, durch den die Filtertrommel nicht in das Suspensionsaufnahmebecken eingreift, zumindest im Wesentlichen vollständig abdeckt.

Die Vakuum- und/oder Druck-Trommelfiltervorrichtung kann zum Beispiel eine Produktaustragevorrichtung aufweisen. Die Produktaustragevorrichtung kann zum Beispiel eingerichtet sein, um einen/den Filterkuchen, der zumindest im Wesentlichen aus dem gefilterten Feststoffmaterial besteht, von der Filtertrommel zu entfernen und/oder um das gefilterte Feststoffmaterial aus dem Vorrichtungsgehäuse auszutragen. Die Produktaustragevorrichtung kann zum Beispiel das Schälmesser und/oder eine Feststoffmaterial-Aufnahmevorrichtung (z.B. einen Feststoffmaterial-Aufnahmebehälter) und/oder eine Feststoffmaterial-Förderschnecke aufweisen. Das Schälmesser kann zum Beispiel eingerichtet sein, um den Filterkuchen von der Filtertrommel abzuschälen. Die Feststoffmaterial-Aufnahmevorrichtung kann zum Beispiel eingerichtet sein, um das von dem Schälmesser abgeschälte Feststoffmaterial aufzunehmen. Die Feststoffmaterial-Förderschnecke kann zum Beispiel eingerichtet sein, um das in der Feststoffmaterial-Aufnahmevorrichtung (z.B. im Feststoffmaterial-Aufnahmebehälter) aufgenommene Feststoffmaterial aus dem Vorrichtungsgehäuse auszutragen. Die Gaszuführleitung kann zum Beispiel oberhalb einer Öffnung des Feststoffmaterial-Aufnahmebehälters angeordnet sein.

Die Verwendung einer ersten und einer zweiten Gasaustrittseinrichtung schließt im Allgemeinen das Vorhandensein noch einer oder mehrerer anderer Gasaustrittseinrichtungen nicht aus; jedoch kann auch nur eine erste Gasaustrittsöffnung oder können nur eine erste und eine zweite Gasaustrittseinrichtung vorgesehen sein.

Durch die Erfindung ist eine Vakuum- und/oder Druck-Trommelfiltervorrichtung bereitgestellt, die ein Vorrichtungsgehäuse, eine Filtertrommel und eine Gaszuführleitung aufweist, mittels der es möglich ist, Gas in das Vorrichtungsgehäuse zuzuführen, sodass Turbulenzen im Inneren des Vorrichtungsgehäuses verringert sind. Dadurch kann eine Kontamination des gefilterten Feststoffmaterials mit Dämpfen der Flüssigkeit der Suspension verringert werden.

Beispielgebende, aber nicht einschränkende Ausführungsformen der vorliegenden Erfindung sind in den Figuren dargestellt und werden im Folgenden näher erläutert.

Es zeigen:
Figuren 1 und 2 vereinfachte, schematische, räumliche Ansichten einer Vakuum- und/oder Druck-Trommelfiltervorrichtung gemäß einer ersten Ausführungsform der vorliegenden Erfindung.
Figur 3 eine vereinfachte, schematische Schnittansicht einer Vakuum- und/oder Druck-Trommetfittervorrichtung gemäß der ersten Ausführungsform der vorliegenden Erfindung.
Figur 4 eine vereinfachte, schematische Schnittansicht einer Vakuum- und/oder Druck-Trommelfiltervorrichtung gemäß einer zweiten Ausführungsform der vorliegenden Erfindung.
Figur 5 eine vereinfachte, schematische Schnittansicht einer Vakuum- und/oder Druck-Trommelfiltervorrichtung gemäß einer dritten Ausführungsform der vorliegenden Erfindung.
Figur 6 eine vereinfachte, schematische Schnittansicht einer Vakuum- und/oder Druck-Trommelfiltervorrichtung gemäß einer vierten Ausführungsform der vorliegenden Erfindung.
Figur 7 eine vereinfachte, schematische Schnittansicht einer Vakuum- und/oder Druck-Trommelfiltervorrichtung gemäß einer fünften Ausführungsform der vorliegenden Erfindung.
Figur 8 eine vereinfachte, schematische Schnittansicht einer Vakuum- und/oder Druck-Trommelfiltervorrichtung gemäß einer sechsten Ausführungsform der vorliegenden Erfindung.
Figur 9 eine vereinfachte, schematische Schnittansicht einer Vakuum- und/oder Druck-Trommelfiltervorrichtung gemäß der fünften Ausführungsform der vorliegenden Erfindung, wobei der in Figur 7 gezeigte Filterkuchen weggelassen ist.
Figur 10 eine vereinfachte, schematische Schnittansicht einer Vakuum- und/oder Druck-Trommelfiltervorrichtung gemäß einer siebten Ausführungsform der vorliegenden Erfindung.
Figur 11 eine vereinfachte, schematische, räumliche Ansicht einer Vakuum- und/oder Druck-Trommeifiltervorrichtung gemäß einer achten Ausführungsform der vorliegenden Erfindung.

In den Figuren sind identische oder ähnliche Elemente mit identischen Bezugszeichen versehen, soweit dies zweckmäßig ist.

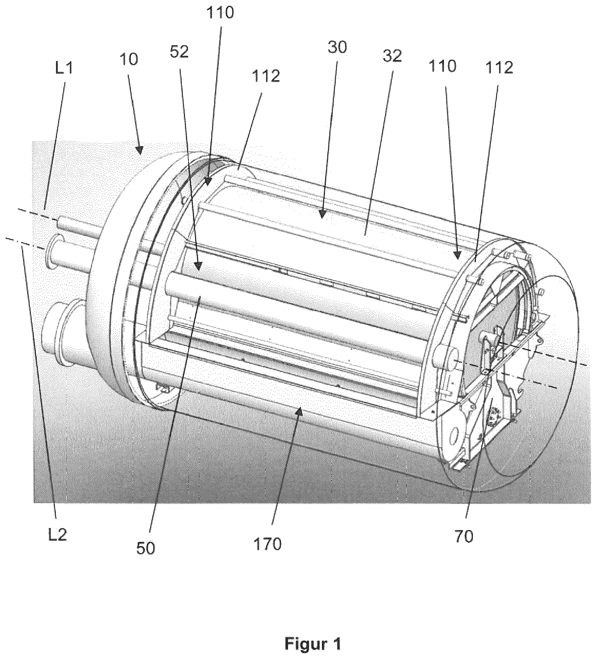

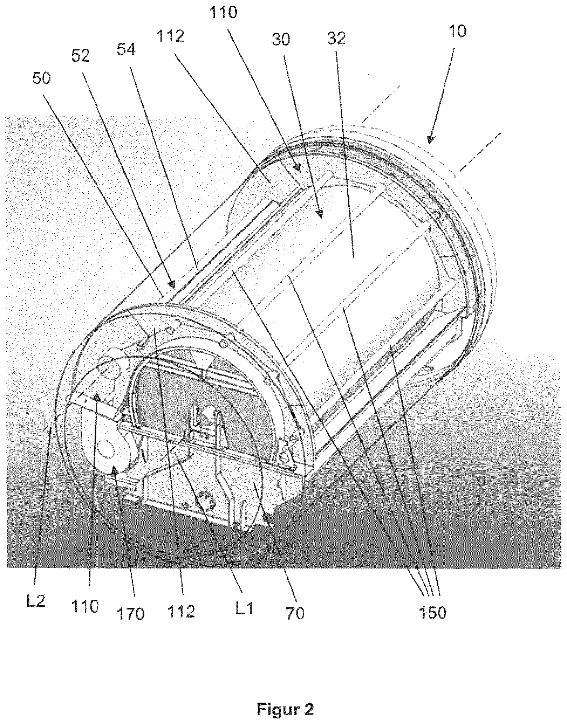

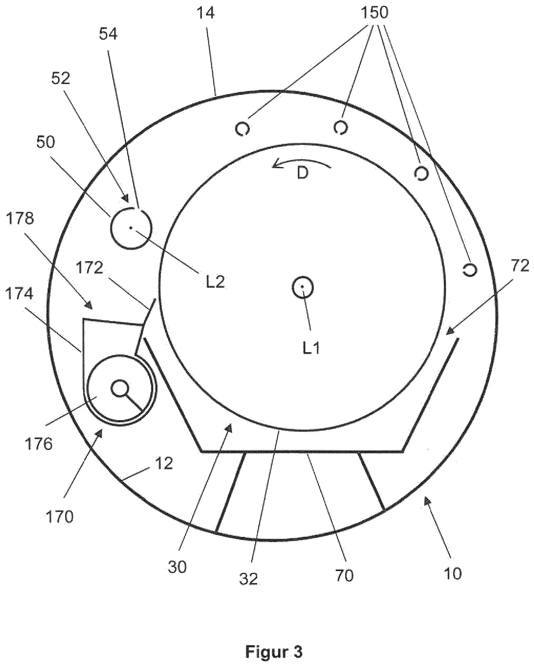

Wie in den **Figuren 1-11** gezeigt weisen Vakuum- und/oder Druck-Trommelfiltervorrichtungen zum Filtern eines Feststoffmaterials aus einer Suspension, die von dem Feststoffmaterial und einer Flüssigkeit gebildet ist, gemäß den diversen Ausführungsformen der Erfindung auf ein Vorrichtungsgehäuse 10, eine drehbare Filtertrommel 30, welche eine Filtertrammellängsachse L1 definiert und welche im Vorrichtungsgehäuse 10 angeordnet ist, eine Gaszuführleitung 50 zur Zuführung eines Gases in das Vorrichtungsgehäuse 10 und ein Schälmesser 172. Das Schälmesser 172 hat eine der Filtertrommel 30 zugewandte Seite 172a und eine von der Filtertrommel 30 abgewandte Seite 172b (bzw. definiert diese). Das Vorrichtungsgehäuse 10 definiert eine Gehäuseinnenfläche 12. Die Filtertrommel 30 ist mittels eines (nicht gezeigten) Antriebs entlang einer Filterbetriebsdrehrichtung D drehangetrieben. Die Gaszuführleitung 50 ist mit einer ersten Gasaustrittseinrichtung 52 versehen, die eine Gasaustrittsöffnung 54 aufweist, welche sich entlang der Filtertrommellängsachse L1 erstreckend ausgebildet ist und aus der das Gas in das Vorrichtungsgehäuse 10 hinein austritt. Die Gasaustrittsöffnung 54 ist radial außerhalb der Filtertrommel 30 und auf einer von der Filtertrommel 30 abgewandten Seite 172b des Schälmessers 172 angeordnet (siehe insbesondere Figuren 3-8). Die Gaszuführleitung 50 und die Gasaustrittsöffnung 54 erstrecken sich zum Beispiel entlang der gesamten Länge der Filtertrommel 30. Durch die Gaszuführleitung 50 ist es möglich, das Gas in das Vorrichtungsgehäuse 10 zuzuführen, sodass Turbulenzen im Inneren des Vorrichtungsgehäuses 10 verringert sind. Dadurch kann eine Kontamination des gefilterten Feststoffmaterials mit Dämpfen der Flüssigkeit der Suspension verringert werden.

Die Gaszuführleitung 50 kann langgestreckt sein und kann eine Leitungslängsachse L2 definieren und kann im Vorrichtungsgehäuse 10 radial außerhalb der Filtertrommel 30 angeordnet sein und kann sich mit ihrer Leitungslängsachse L2 parallel zu der Filtertrommellängsachse L1 erstrecken (siehe Figuren 1-10). Die eine oder mehreren Gasaustrittsöffnungen 54 der ersten Gasaustrittseinrichtung 52 der Gaszuführleitung 50 kann/können sich entlang der Leitungslängsachse der Gaszuführleitung 50 erstreckend ausgebildet sein. Dadurch kann das Gas in das Vorrichtungsgehäuse zugeführt werden, sodass Turbulenzen im Inneren des Vorrichtungsgehäuses 10 verringert sind und eine Kontamination des gefilterten Feststoffmaterials mit Dämpfen der Flüssigkeit der Suspension kann verringert werden.

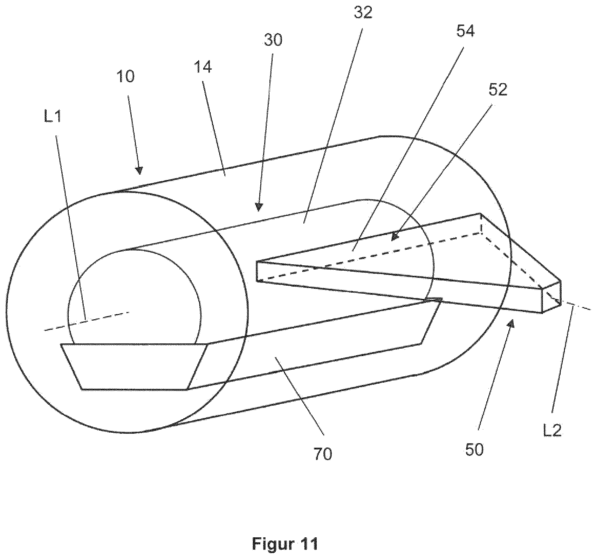

Die Gaszuführleitung 50 kann von außen zu einer Gehäuseumfangswand 14 des Vorrichtungsgehäuses 10 geführt sein und sich durch die Gehäuseumfangswand 14 hindurch erstrecken (siehe Figur 11). Die Gasaustrittseinrichtung 52 mit ihrer einen oder ihren mehreren Gasaustrittsöffnungen 54 kann benachbart zu oder in der Gehäuseumfangswand 14 des Vorrichtungsgehäuses 10 ausgebildet sein. Dadurch kann das Gas in das Vorrichtungsgehäuse zugeführt werden, sodass Turbulenzen im Inneren des Vorrichtungsgehäuses 10 verringert sind und eine Kontamination des gefilterten Feststoffmaterials mit Dämpfen der Flüssigkeit der Suspension kann verringert werden.

Die Vakuum- und/oder Druck-Trommelfiltervorrichtungen gemäß den Figuren **1-11** weisen ferner zum Beispiel ein Suspensionsaufnahmebecken 70 auf, in welchem die Suspension angeordnet ist. Das Suspensionsaufnahmebecken 70 ist hier in dem Vorrichtungsgehäuse 10 angeordnet. Die Filtertrommellängsachse L1 ist horizontal angeordnet und die Filtertrommel 30 greift mit einem unteren Abschnitt von ihr durch eine Öffnung 72 des Suspensionsaufnahmebeckens 70 hindurch in das Suspensionsaufnahmebecken 70 ein, sodass eine Außenfläche 32 der Filtertrommel 30 im Rahmen der Drehung der Filtertrommel 30 in Filterbetriebsdrehrichtung D an einem ersten Vorrichtungsbereich fortlaufend in das Suspensionsaufnahmebecken 70 hinein gelangt und an einem zweiten Vorrichtungsbereich fortlaufend aus dem Suspensionsaufnahmebecken 70 heraus gelangt. Die Gaszuführleitung 50 ist benachbart zu dem ersten Vorrichtungsbereich angeordnet.

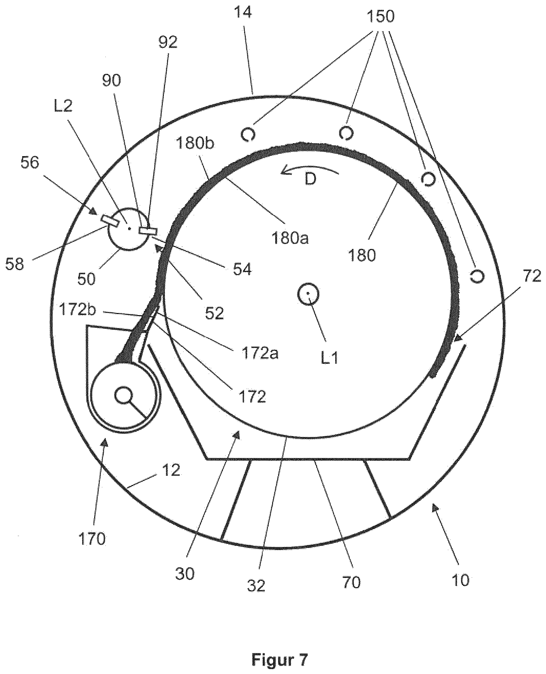

Die Vakuum- und/oder Druck-Trommelfiltervorrichtungen gemäß der Erfindung weisen ferner zum Beispiel eine Produktaustragevorrichtung 170 auf (siehe Figuren 1-10), durch welche der (in Figur 7 gezeigte) Filterkuchen 180, der zumindest im Wesentlichen aus dem gefilterten Feststoffmaterial besteht, von der Filtertrommel 30 entfernt wird und durch welche das gefilterte Feststoffmaterial aus dem Vorrichtungsgehäuse 10 ausgetragen wird. Der Filterkuchen 180 hat eine der Filtertrommel 30 zugewandte Seite 180a und eine von der Filtertrommel 30 abgewandte Seite 180b (bzw. definiert diese). Die Produktaustragevorrichtung 170 weist zum Beispiel das Schälmesser 172, durch welches der Filterkuchen 180 von der Filtertrommel 30 abgeschält wird, einen Feststoffmaterial-Aufnahmebehälter 174, in den das abgeschälte Feststoffmaterial aufgenommen wird, und eine Feststoffmaterial-Förderschnecke 176 auf, mit der das Feststoffmaterial aus dem Feststoffmaterial-Aufnahmebehälter 174 aus dem Vorrichtungsgehäuse 10 ausgetragen wird. Die Gaszuführleitung 50 ist zum Beispiel oberhalb einer Öffnung 178 des Feststoffmaterial-Aufnahmebehälters 174 angeordnet. Die Gaszuführleitung 50 und/oder die Gasaustrittsöffnung 54 kann zum Beispiel radial außerhalb der Filtertrommel 30 und auf einer von der Filtertrommel 30 abgewandten Seite 180b des Filterkuchens 180 angeordnet sein (siehe insbesondere Figur 7).

Die Vakuum- und/oder Druck-Trommelfiltervorrichtungen gemäß der Erfindung weisen ferner zum Beispiel eine Filterkuchen-Waschvorrichtung auf, die vier Waschleitungen 150 aufweist (siehe Figuren 1-10). Die vier Waschleitungen 150 sind radial außerhalb der Filtertrommel 30 (und auf einer von der Filtertrommel 30 abgewandten Seite 180b des Filterkuchens 180) angeordnet. Eine der Waschleitungen 150 ist benachbart zu dem zweiten Vorrichtungsbereich angeordnet. Die anderen drei Waschleitungen 150 sind in Filterbetriebsdrehrichtung D bezüglich der Filtertrommellängsachse L1 in einem Winkelabstand von etwa 40°, 70° und 115° zu der ersten Waschleitung um die Filtertrommel 30 herum angeordnet.

Die Vakuum- und/oder Druck-Trommelfiltervorrichtungen gemäß der Erfindung weisen ferner zum Beispiel Umfangsleitbleche 110 auf (siehe Figuren 1-10), welche sich in Umfangsrichtung der Filtertrommel 30 benachbart zur Außenfläche 32 der Filtertrommel 30 erstrecken und welche entlang der Filtertrommellängsachse L1 im Abstand voneinander angeordnet sind und welche jeweils eine Umfangsleitblechfläche 112 definieren, die sich orthogonal zur Filtertrommellängsachse L1 erstreckt. Die Umfangsleitbleche 110 sind im Vorrichtungsgehäuse 10 drehfest sowie jeweilig benachbart zu einem jeweils zugeordneten Längsende der Filtertrommel 30 angeordnet. Die Umfangsleitbleche 110 sind an der Produktaustragevorrichtung 170 und dem Suspensionsaufnahmebecken 70 befestigt. Die Umfangsleitbleche 110 sind zum Beispiel nicht mit dem Vorrichtungsgehäuse 10 verbunden bzw. sind nicht an diesem befestigt. Durch die Umfangsleitbleche 110 ist es zum Beispiel möglich, Turbulenzen im Inneren des Vorrichtungsgehäuses 10 zu verringern. Dadurch kann zum Beispiel eine Kontamination des gefilterten Feststoffmaterials mit Dämpfen der Flüssigkeit der Suspension verringert werden.

Die in den **Figuren 1-3** gezeigte Vakuum- und/oder Druck-Trommelfiltervorrichtung weist eine langgestreckte Gaszuführleitung 50 auf, die eine Leitungslängsachse L2 definiert und die im Vorrichtungsgehäuse 10 radial außerhalb der Filtertrommel 30 (und auf einer von der Filtertrommel 30 abgewandten Seite 180b des (hier nicht gezeigten) Filterkuchens bzw. auf einer von der Filtertrommel 30 abgewandten Seite 172b des Schälmessers 172) angeordnet ist und die sich mit ihrer Leitungslängsachse L2 parallel zu der Filtertrommellängsachse L1 erstreckt und die mit einer ersten Gasaustrittseinrichtung 52 versehen ist, die eine Schlitzöffnung als Gasaustrittsöffnung 54 aufweist, welche auf einer geraden Linie parallel zu der Leitungslängsachse L2 verläuft und aus der das Gas in das Vorrichtungsgehäuse 10 hinein austritt. Die Leitungslängsachse L2 der Gaszuführleitung 50 ist oberhalb einer horizontalen Ebene, die durch die Filtertrommellängsachse L1 verläuft, angeordnet. Die Gasaustrittsöffnung 54 ist (im Wesentlichen) tangential zur Filtertrommel 30 ausgerichtet, sodass das Gas (im Wesentlichen) tangential bezüglich der Filtertrommel 30 strömend aus der Gasaustrittsöffnung 54 austritt. Dadurch ist es möglich, das Gas in das Vorrichtungsgehäuse 10 zuzuführen, sodass Turbulenzen im Inneren des Vorrichtungsgehäuses 10 verringert sind. Dadurch kann eine Kontamination des gefilterten Feststoffmaterials mit Dämpfen der Flüssigkeit der Suspension verringert werden.

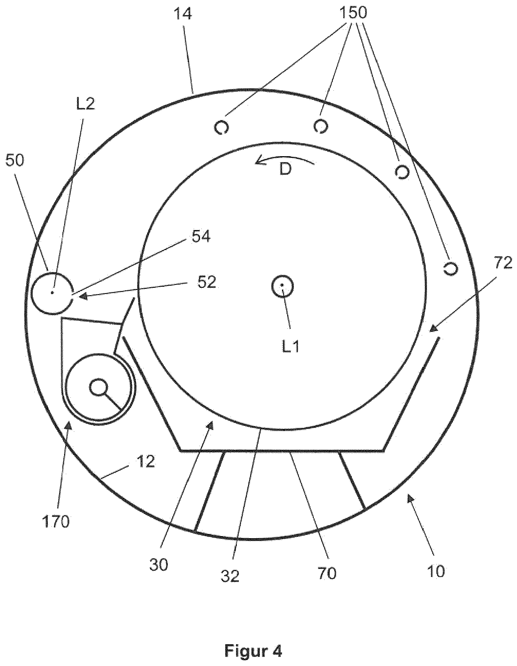

Die in der **Figur 4** gezeigte Vakuum- und/oder Druck-Trommelfiltervorrichtung weist eine langgestreckte Gaszuführleitung 50 auf, die eine Leitungslängsachse L2 definiert und die im Vorrichtungsgehäuse 10 radial außerhalb der Filtertrommel 30 (und auf einer von der Filtertrommel 30 abgewandten Seite 180b des (hier nicht gezeigten) Filterkuchens bzw. auf einer von der Filtertrommel 30 abgewandten Seite 172b des Schälmessers 172) angeordnet ist und die sich mit ihrer Leitungslängsachse L2 parallel zu der Filtertrommellängsachse L1 erstreckt und deren Leitungslängsachse L2 unterhalb einer horizontalen Ebene, die durch die Filtertrommellängsachse L1 verläuft, angeordnet ist. Die Gaszuführleitung 50 ist mit einer ersten Gasaustrittseinrichtung 52 versehen, die eine Schlitzöffnung als Gasaustrittsöffnung 54 aufweist, welche auf/entlang einer geraden Linie parallel zu der Leitungslängsachse L2 verläuft und aus der das Gas in das Vorrichtungsgehäuse 10 hinein austritt. Die Gasaustrittsöffnung 54 ist (im Wesentlichen) radial auf die Filtertrommellängsachse L1 ausgerichtet, sodass das Gas (im Wesentlichen) radial in Richtung auf die Filtertrommellängsachse L1 gerichtet aus der Gasaustrittsöffnung 54 austritt. Die Gaszuführleitung 50 ist ferner angeordnet, sodass das Gas in Richtung auf das Schälmesser 172 gerichtet und im Wesentlichen parallel zu der Öffnung 178 des Feststoffmaterial-Aufnahmebehälters 174 aus der Gasaustrittsöffnung 54 austritt. Dadurch kann ein so genannter Luftvorhang über der Öffnung 178 des Feststoffmaterial-Aufnahmebehälters 174 gebildet werden, wodurch Eindringen von Dämpfen der Flüssigkeit der Suspension in den Feststoffmaterial-Aufnahmebehälter 174 verringert werden kann. Dadurch kann eine Kontamination des gefilterten Feststoffmaterials mit Dämpfen der Flüssigkeit der Suspension verringert werden.

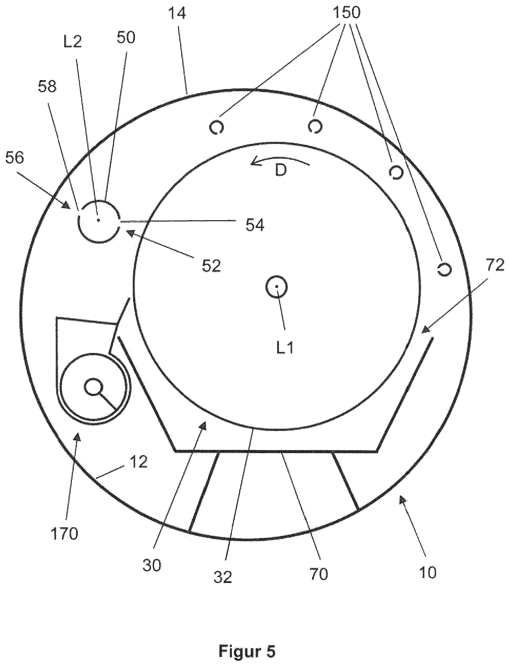

Die in den **Figuren 5-10** gezeigten Vakuum- und/oder Druck-Trommelfiltervorrichtungen weisen eine langgestreckte Gaszuführleitung 50 auf, die eine Leitungslängsachse L2 definiert und die im Vorrichtungsgehäuse 10 radial außerhalb der Filtertrommel 30 (und auf einer von der Filtertrommel 30 abgewandten Seite 180b des (in Figur 7 gezeigten) Filterkuchens 180 bzw. auf einer von der Filtertrommel 30 abgewandten Seite 172b des Schälmessers 172) angeordnet ist und die sich mit ihrer Leitungslängsachse L2 parallel zu der Filtertrommellängsachse L1 erstreckt und die mit einer ersten Gasaustrittseinrichtung 52 versehen ist, die eine Schlitzöffnung als Gasaustrittsöffnung 54 aufweist, welche auf einer geraden Linie parallel zu der Leitungslängsachse L2 verläuft und aus der das Gas in das Vorrichtungsgehäuse 10 hinein austritt. Die Gaszuführleitung 50 ist ferner mit einer zweiten Gasaustrittseinrichtung 56 versehen, die eine Schlitzöffnung als Gasaustrittsöffnung 58 aufweist, welche auf einer geraden Linie parallel zu der Leitungslängsachse L2 verläuft und aus der das Gas in das Vorrichtungsgehäuse 10 hinein austritt. Wie die Gaszuführleitung 50 und die Gasaustrittsöffnung 54 kann sich auch die Gasaustrittsöffnung 56 entlang der gesamten Länge der Filtertrommel 30 erstrecken.

Die Gasaustrittsöffnung 54 der ersten Gasaustrittseinrichtung 52 ist (im Wesentlichen) radial auf die Filtertrommellängsachse L1 ausgerichtet, sodass das Gas (im Wesentlichen) radial in Richtung auf die Filtertrommellängsachse L1 gerichtet aus der Gasaustrittsöffnung 54 der ersten Gasaustrittseinrichtung 52 austritt. Dadurch trifft das Gas, das aus der Gasaustrittsöffnung 54 der ersten Gasaustrittseinrichtung 52 austritt, (im Wesentlichen) orthogonal auf die Außenfläche 32 der Filtertrommel 30 und kann in zwei Gasströme geteilt werden, von denen der eine Gasstrom entlang der Außenfläche 32 der Filtertrommel 30 in Filterbetriebsdrehrichtung D strömt und der andere Gasstrom entlang der Außenfläche 32 der Filtertrommel 30 entgegen der Filterbetriebsdrehrichtung D strömt. Dadurch kann der Filterkuchen bzw. das gefilterte Feststoffmaterial mit dem zugeführten Gas beaufschlagt werden und eine Kontamination des Feststoffmaterials mit Dämpfen der Flüssigkeit der Suspension kann verringert werden. Ferner kann durch das Gas des Gasstroms, der entlang der Außenfläche 32 der Filtertrommel 30 in Filterbetriebsdrehrichtung D strömt, ein so genannter Luftvorhang über der Öffnung 178 des Feststoffmaterial-Aufnahmebehälters 174 gebildet werden, wodurch Eindringen von Dämpfen der Flüssigkeit der Suspension in den Feststoffmaterial-Aufnahmebehälter 174 verringert werden kann und eine Kontamination des Feststoffmaterials mit Dämpfen der Flüssigkeit der Suspension verringert werden kann.

Die Gasaustrittsöffnung 58 der zweiten Gasaustrittseinrichtung 56 ist (im Wesentlichen) orthogonal zu einem Abschnitt der Gehäuseinnenfläche 12 des Vorrichtungsgehäuses 10 ausgerichtet, der der Gasaustrittsöffnung 58 der zweiten Gasaustrittseinrichtung 56 (räumlich) am nächsten ist, sodass das Gas (im Wesentlichen) orthogonal zu diesem Abschnitt der Gehäuseinnenfläche 12 des Vorrichtungsgehäuses 10 aus der Gasaustrittsöffnung 58 der zweiten Gasaustrittseinrichtung 56 austritt. Dadurch trifft das Gas, das aus der Gasaustrittsöffnung 58 der zweiten Gasaustrittseinrichtung 56 austritt, (im Wesentlichen) orthogonal auf die Gehäuseinnenfläche 12 des Vorrichtungsgehäuses 10 und kann in zwei Gasströme geteilt werden, von denen der eine Gasstrom entlang der Gehäuseinnenfläche 12 des Vorrichtungsgehäuses 10 in Filterbetriebsdrehrichtung D strömt und der andere Gasstrom entlang der Gehäuseinnenfläche 12 des Vorrichtungsgehäuses 10 entgegen der Filterbetriebsdrehrichtung D strömt. Durch das Gas des Gasstroms, der entlang der Gehäuseinnenfläche 12 des Vorrichtungsgehäuses 10 in Filterbetriebsdrehrichtung D strömt, kann der Luftvorhang über der Öffnung 178 des Feststoffmaterial-Aufnahmebehälters 174 verstärkt werden, wodurch Eindringen von Dämpfen der Flüssigkeit der Suspension in den Feststoffmaterial-Aufnahmebehälter 174 verringert werden kann und eine Kontamination des Feststoffmaterials mit Dämpfen der Flüssigkeit der Suspension verringert werden kann.

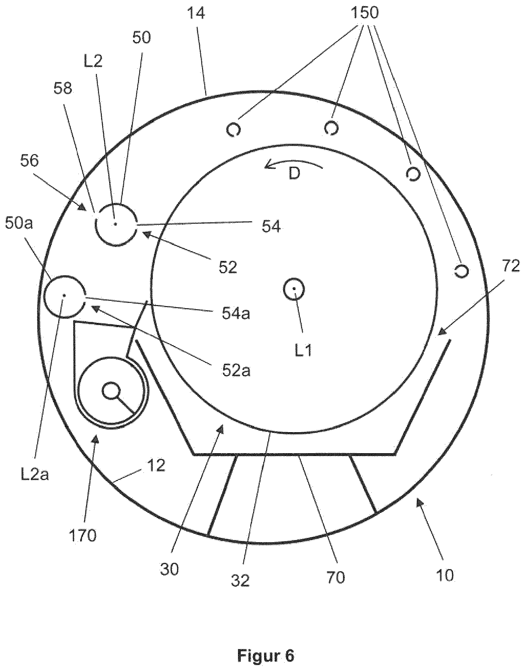

Die in der **Figur 6** gezeigte Vakuum- und/oder Druck-Trommelfiltervorrichtung weist ferner eine zweite langgestreckte Gaszuführleitung 50a zur Zuführung eines Gases in das Vorrichtungsgehäuse 10 auf. Die zweite Gaszuführleitung 50a definiert eine Leitungslängsachse L2a der zweiten Gaszuführleitung 50a und ist im Vorrichtungsgehäuse 10 radial außerhalb der Filtertrommel 30 (und auf einer von der Filtertrommel 30 abgewandten Seite 180b des (hier nicht gezeigten) Filterkuchens bzw. auf einer von der Filtertrommel 30 abgewandten Seite 172b des Schälmessers 172) angeordnet und erstreckt sich mit ihrer Leitungslängsachse L2a der zweiten Gaszuführleitung 50a parallel zu der Filtertrommellängsachse L1. Die zweite Gaszuführleitung 50a ist benachbart zu dem ersten Bereich und oberhalb der Öffnung 178 des Feststoffmaterial-Aufnahmebehälters 174 angeordnet. Die Leitungslängsachse L2a der zweiten Gaszuführleitung 50a ist unterhalb einer horizontalen Ebene, die durch die Filtertrommellängsachse L1 verläuft, angeordnet.

Die zweite Gaszuführleitung 50a ist mit einer Gasaustrittseinrichtung 52a der zweiten Gaszuführleitung 50a versehen, die von mehreren bezüglich der Leitungslängsachse L2a der zweiten Gaszuführleitung 50a radial ausgebildeten Rundlöchern gebildet ist, die entlang der Leitungslängsachse L2a der zweiten Gaszuführleitung im Abstand voneinander angeordnet sind und die kreisförmige Gasaustrittsöffnungen 54a der zweiten Gaszuführleitung 50a bilden, aus denen das Gas in das Vorrichtungsgehäuse 10 hinein austritt. Die zweite Gaszuführleitung 50a und die Gasaustrittsöffnungen 54a der zweiten Gaszuführleitung 50a erstrecken sich zumindest im Wesentlichen entlang der gesamten Länge der Filtertrommel 30. Die Gasaustrittsöffnungen 54a der zweiten Gaszuführleitung 50a sind zum Beispiel auf einer geraden Linie liegend ausgebildet, die parallel zur Leitungslängsachse L2a der zweiten Gaszuführleitung 50a verläuft. Die Gasaustrittsöffnungen 54a der zweiten Gaszuführleitung 50a sind (im Wesentlichen) radial auf die Filtertrommellängsachse L1 ausgerichtet, sodass das Gas, (im Wesentlichen) radial in Richtung auf die Filtertrommellängsachse L1 gerichtet aus den Gasaustrittsöffnung 54a der zweiten Gaszuführleitung 50a austritt.

Die zweite Gaszuführleitung 50a ist ferner angeordnet, sodass das Gas in Richtung auf das Schälmesser 172 gerichtet und im Wesentlichen parallel zu der Öffnung 178 des Feststoffmaterial-Aufnahmebehälters 174 aus der Gasaustrittsöffnung 54a der zweiten Gaszuführleitung 50a austritt. Dadurch kann der Luftvorhang über der Öffnung 178 des Feststoffmaterial-Aufnahmebehälters 174 verstärkt werden, wodurch Eindringen von Dämpfen der Flüssigkeit der Suspension in den Feststoffmaterial-Aufnahmebehälter 134 verringert werden kann und eine Kontamination des Feststoffmaterials mit Dämpfen der Flüssigkeit der Suspension verringert werden kann.

Die in den **Figuren 7-9** gezeigten Vakuum- und/oder Druck-Trommelfiltervorrichtungen weisen ferner mehrere Leitfinnen 90 auf, welche jeweils eine Finnenfläche 92 definieren, wobei jeweils mehrere Leitfinnen 90 an der Gasaustrittsöffnung 54 der ersten Gasaustrittseinrichtung 52 und an der Gasaustrittsöffnung 58 der zweiten Gasaustrittseinrichtung 56 angeordnet sind. Die hier gezeigten Leitfinnen 90 haben die Form ebener (bzw. nicht gekrümmter) Platten/Plättchen und erstrecken sich mit ihrer Finnenfläche 92 in einem Winkel von 90° zur Leitungslängsachse L2, um das aus den Gasaustrittsöffnungen austretende Gas in einem Winkel von 90° zur Leitungslängsachse L2 zu leiten. Die Leitfinnen 90 haben hier alle die gleiche Form und die gleiche Größe. Auch die Finnenflächen 92 der Leitfinnen 90 haben hier alle die gleiche Form und die gleiche Größe. Durch die Leitfinnen können Turbulenzen im Inneren des Vorrichtungsgehäuses verringert werden, wodurch eine Kontamination des gefilterten Feststoffmaterials mit Dämpfen der Flüssigkeit der Suspension verringert werden kann. Die Leitfinnen 90 bzw. die von den Leitfinnen 90 gebildete Leitfinnen-Struktur kann für die erste und/oder die zweite Gasaustrittseinrichtung 52 wie in den Ausführungsformen von Figuren 1-11 dargestellt herangezogen werden.

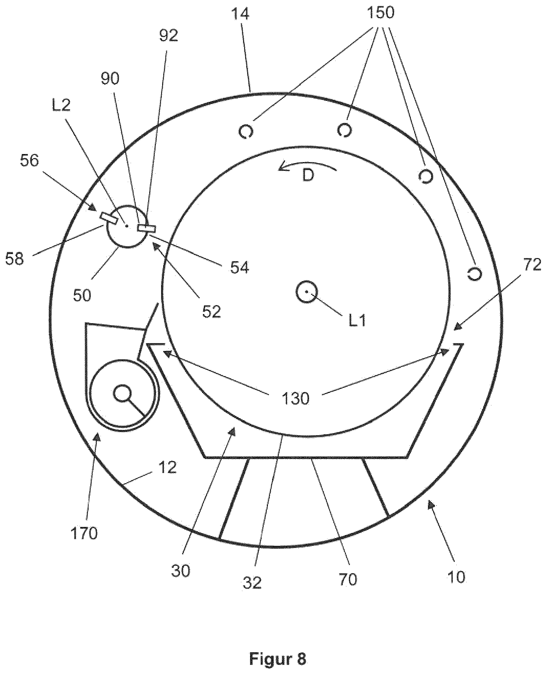

Die in der **Figur 8** gezeigte Vakuum- und/oder Druck-Trommelfiltervorrichtung weist ferner eine Abdeckvorrichtung 130 auf. In der gezeigten Ausführungsform ist ein Bereich der Öffnung 72 des Suspensionsaufnahmebeckens 70, durch den die Filtertrommel 30 nicht in das Suspensionsaufnahmebecken 70 eingreift, im Wesentlichen vollständig von der Abdeckvorrichtung 130 abgedeckt. Die Abdeckvorrichtung 130 kann gestaltet sein, sodass sie den (nicht gezeigten) Filterkuchen nicht berührt bzw. mit diesem nicht in Kontakt ist. Alternativ kann die Abdeckvorrichtung 130 gestaltet sein, sodass sie den (nicht gezeigten) Filterkuchen berührt bzw. mit diesem in Kontakt ist, wobei die Abdeckvorrichtung zum Beispiel aus einem an dem Filterkuchen entlanggleitenden, elastischen Material hergestellt sein kann. Durch die Abdeckvorrichtung 130 kann der Austrag von Dämpfen der Flüssigkeit der Suspension aus dem Suspensionsaufnahmebecken 70 verringert werden, wodurch eine Kontamination des gefilterten Feststoffmaterials mit Dämpfen der Flüssigkeit der Suspension verringert werden kann. Die oben erläuterte Abdeckvorrichtung 130 kann bei den Ausführungsformen von Figuren 1-11 herangezogen werden.

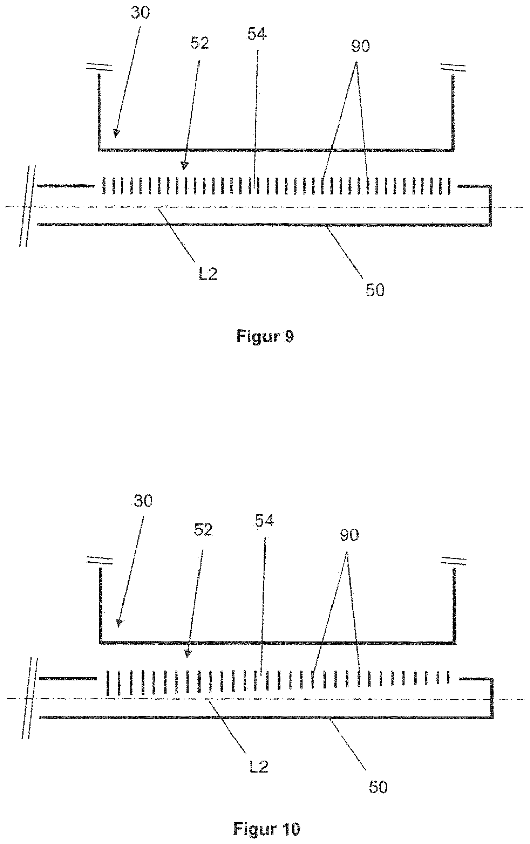

Die in der **Figur 10** gezeigte Vakuum- und/oder Druck-Trommelfiltervorrichtung weist ferner mehrere Leitfinnen 90 auf, welche jeweils eine Finnenfläche 92 definieren, wobei die Leitfinnen 90 an der Gasaustrittsöffnung 54 der ersten Gasaustrittseinrichtung 52 angeordnet sind. Die hier gezeigten Leitfinnen 90 haben die Form ebener (bzw. nicht gekrümmter) Platten/Plättchen und erstrecken sich mit ihrer Finnenfläche 92 in einem Winkel von 90° zur Leitungslängsachse L2, um das aus den Gasaustrittsöffnungen austretende Gas in einem Winkel von 90° zur Leitungslängsachse L2 zu leiten. Die Leitfinnen 90 haben hier verschieden große Finnenflächen 92. Die Größe der Finnenflächen 92 der Leitfinnen 90 ist dabei an die Strömungsgeschwindigkeit des Gases in der Gaszuführleitung 50 und in/an der Gasaustrittseinrichtung 52 angepasst. Leitfinnen 90, die an/in einem Bereich größerer Strömungsgeschwindigkeit angeordnet sind, weisen eine größere Finnenfläche 92 auf, als Leitfinnen 90, die an/in einem Bereich geringerer Strömungsgeschwindigkeit angeordnet sind. Dadurch kann eine verbesserte Leitung/Führung des Gasstromes erreicht werden, sodass Turbulenzen im Inneren des Vorrichtungsgehäuses verringert werden können, wodurch eine Kontamination des gefilterten Feststoffmaterials mit Dämpfen der Flüssigkeit der Suspension verringert werden kann. Die oben anhand von Fig. 10 erläuterte, von den Leitfinnen 90 gebildete Leitfinnen-Struktur kann bei den Ausführungsformen von Figuren 1-11 herangezogen werden.

Die in der **Figur 11** gezeigte Vakuum- und/oder Druck-Trommelfiltervorrichtung weist eine Gaszuführleitung 50 auf, die mit einer ersten Gasaustrittseinrichtung 52 versehen ist, die eine Schlitzöffnung als Gasaustrittsöffnung 54 aufweist, welche auf einer geraden Linie parallel zur Filtertrommellängsachse L1 verläuft und aus der das Gas in das Vorrichtungsgehäuse 10 hinein austritt. Die Gaszuführleitung 50 definiert hier eine Leitungslängsachse L2, welche sich quer zur Filtertrommellängsachse L1 erstreckt. Die Gaszuführleitung 50 kann zum Beispiel mit ihrer Leitungslängsachse L2 quer (z.B. zumindest im Wesentlichen radial) zur Filtertrommellängsachse L1 verlaufen. Die von der Gaszuführleitung 50 definierte Leitungslängsachse L2 kann zum Beispiel in einem Winkel von größer 0° und kleiner gleich 90° zur Filtertrommellängsachse L1 angeordnet sein. Alternativ kann die Gaszuführleitung 50 sich mit ihrer Leitungslängsachse L2 auch zumindest im Wesentlichen parallel zur Filtertrommellängsachse L1 erstrecken, zum Beispiel kann die oben mit Bezug auf Figuren 1-4 beschriebene Gaszuführleitung 50 (zumindest teilweise) außerhalb des Vorrichtungsgehäuses angeordnet sein, wobei die Gasaustrittsöffnung(en) 54 der Gaszuführleitung 50 in oder an oder benachbart der Gehäuseumfangswand 14 des Vorrichtungsgehäuses 10 ausgebildet sein können. In Figur 11 ist eine Gaszuführleitung 50 gezeigt, die eine Leitungslängsachse L2 definiert, die in einem Winkel von (im Wesentlichen) 90° zur Filtertrommellängsachse L1 verläuft und die (im Wesentlichen) tangential zur Filtertrommel 30 verläuft. Die Gaszuführleitung 50 ist hier entlang ihrer Leitungslängsachse L2 mit einer sich parallel zu der Filtertrommellängsachse L1 erfolgenden, trichterförmigen Verbreiterung ausgebildet, welche in der Gasaustrittseinrichtung 52 ausmündet. Die Gasaustritteinrichtung 52 ist hier von einer stirnseitigen, parallel zu der Filtertrommellängsachse L1 sowohl langgestreckten als auch sich erstreckenden Stirnendfläche der Verbreiterung gebildet, in welcher Stirnendfläche die eine oder die mehren Gasaustrittsöffnungen 54 ausgebildet sind, wobei hier von der besagten Stirnendfläche der Verbreiterung eine einzige in das Vorrichtungsgehäuse 10 hinein offene (erste) Gasaustrittsöffnung 54 ausgebildet ist, welche parallel zu der Filtertrommellängsachse L1 sowohl langgestreckt ist als auch sich erstreckt (Schlitzöffnung). Die Gasaustrittsöffnung 54 der Gaszuführleitung 50 ist hier oberhalb einer horizontalen Ebene, die durch die Filtertrommellängsachse L1 verläuft, angeordnet. Die Gasaustrittsöffnung 54 ist ferner (im Wesentlichen) tangential zur Filtertrommel 30 ausgerichtet, sodass das Gas (im Wesentlichen) tangential bezüglich der Filtertrommel 30 strömend aus der Gasaustrittsöffnung 54 austritt. Dadurch kann das Gas in das Vorrichtungsgehäuse zugeführt werden, sodass Turbulenzen im Inneren des Vorrichtungsgehäuses 10 verringert sind und eine Kontamination des gefilterten Feststoffmaterials mit Dämpfen der Flüssigkeit der Suspension kann verringert werden.

Die vorhergehende Beschreibung von spezifischen beispielgebenden Ausführungsformen der vorliegenden Erfindung wurde präsentiert zum Zwecke der Illustration und Beschreibung. Sie soll nicht erschöpfend sein oder die Erfindung auf die offenbarten präzisen Formen beschränken, und selbstverständlich sind viele Modifikationen und Variationen im Lichte der obigen Lehre möglich. Die beispielgebenden Ausführungsformen wurden ausgewählt und beschrieben, um bestimmte Prinzipien der Erfindung und ihre praktische Anwendung zu erläutern, um hierdurch Fachleuten zu ermöglichen, verschiedene beispielgebende Ausführungsformen der vorliegenden Erfindung sowie verschiedene Alternativen und Modifikationen davon herzustellen und anzuwenden. Es ist beabsichtigt, dass der Umfang der Erfindung durch die hieran angehängten Ansprüche definiert wird.

## Patentansprüche

1. Vakuum- und/oder Druck-Trommelfiltervorrichtung zum Filtern eines Feststoffmaterials aus einer Suspension, die von dem Feststoffmaterial und einer Flüssigkeit gebildet ist, mit
einem Vorrichtungsgehäuse (10),
einer drehbaren Filtertrommel (30), welche eine Filtertrommellängsachse (L1) definiert und welche im Vorrichtungsgehäuse (10) angeordnet ist,
einer Gaszuführleitung (50) zur Zuführung eines Gases in das Vorrichtungsgehäuse (10),
einer Gaszuführvorrichtung zum Zuführen des Gases in die Gaszuführleitung (50), und
einem Schälmesser (172),
wobei die Gaszuführleitung (50) mit einer ersten Gasaustrittseinrichtung (52) versehen ist, die eine oder mehrere Gasaustrittsöffnungen (54) aufweist, welche sich entlang der Filtertrommellängsachse (L1) erstreckend ausgebildet sind und aus denen das Gas in das Vorrichtungsgehäuse (10) hinein austritt, und
wobei die eine oder mehreren Gasaustrittsöffnungen (54) radial außerhalb der Filtertrommel (30) und auf einer von der Filtertrommel (30) abgewandten Seite (172b) des Schälmessers (172) angeordnet sind.

2. Vakuum- und/oder Druck-Trommelfiltervorrichtung gemäß Anspruch 1,
wobei die Gaszuführleitung (50) langgestreckt ist,
wobei die Gaszuführleitung (50) eine Leitungslängsachse (L2) definiert und im Vorrichtungsgehäuse (10) radial außerhalb der Filtertrommel (30) angeordnet ist und sich mit ihrer Leitungslängsachse (L2) zumindest im Wesentlichen parallel zu der Filtertrommellängsachse (L1) erstreckt, und
wobei die eine oder mehreren Gasaustrittsöffnungen (54) sich entlang der Leitungslängsachse (L2) erstreckend ausgebildet sind.

3. Vakuum- und/oder Druck-Trommelfiltervorrichtung gemäß Anspruch 1,
wobei die Gaszuführleitung (50) von außen zu einer Gehäuseumfangswand (14) des Vorrichtungsgehäuses (10) geführt ist und sich durch die Gehäuseumfangswand (14) hindurch erstreckt.

4. Vakuum- und/oder Druck-Trommelfiltervorrichtung gemäß einem der Ansprüche 1 bis 3,
wobei die erste Gasaustrittseinrichtung (52) mit ihrer einen oder ihren mehreren Gasaustrittsöffnungen (54) benachbart zu oder in der Gehäuseumfangswand (14) des Vorrichtungsgehäuses (10) ausgebildet ist.

5. Vakuum- und/oder Druck-Trommelfiltervorrichtung gemäß Anspruch 3 oder gemäß Anspruch 3 und 4,
wobei die Gaszuführleitung (50) eine Leitungslängsachse (L2) definiert, welche sich quer zur Filtertrommellängsachse (L1) erstreckt,
wobei die Gaszuführleitung (50) entlang ihrer Leitungslängsachse (L2) mit einer sich parallel zu der Filtertrommellängsachse (L1) erfolgenden, optional trichterförmigen, Verbreiterung ausgebildet ist, welche in der Gasaustrittseinrichtung (52) ausmündet,
wobei die erste Gasaustritteinrichtung (52) von einer stirnseitigen, parallel zu der Filtertrommellängsachse (L1) langgestreckten und sich erstreckenden Stirnendfläche der Verbreiterung gebildet ist, in welcher Stirnendfläche die eine oder die mehren Gasaustrittsöffnungen (54) ausgebildet sind, und
wobei optional von der besagten Stirnendfläche der Verbreiterung eine einzige in das Vorrichtungsgehäuse (10) hinein offene erste Gasaustrittsöffnung (54) ausgebildet ist, welche parallel zu der Filtertrommellängsachse (L1) sowohl langgestreckt ist als auch sich erstreckt.

6. Vakuum- und/oder Druck-Trommelfiltervorrichtung gemäß Anspruch 2,
wobei die Gaszuführleitung (50) ferner mit einer zweiten Gasaustrittseinrichtung (56) versehen ist, die eine oder mehrere Gasaustrittsöffnungen (58) aufweist, welche sich entlang der Leitungslängsachse (L2) erstreckend ausgebildet sind und aus denen das Gas in das Vorrichtungsgehäuse (10) hinein austritt,
wobei, optional, die zweite Gasaustrittseinrichtung (56) bezüglich der Leitungslängsachse (L2) in einem Winkelabstand von größer als 90°, und optional von kleiner als 180°, zu der ersten Gasaustrittseinrichtung (52) angeordnet ist, und
wobei, optional, das Vorrichtungsgehäuse (10) eine Gehäuseinnenfläche (12) definiert, wobei die eine oder die mehreren Gasaustrittsöffnungen (54) der ersten Gasaustrittseinrichtung (52) radial zumindest im Wesentlichen auf die Filtertrommellängsachse (L1) ausgerichtet sind, sodass das Gas, zumindest im Wesentlichen radial in Richtung auf die Filtertrommellängsachse (L1) gerichtet aus der einen oder den mehreren Gasaustrittsöffnungen (54) der ersten Gasaustrittseinrichtung (52) austritt, und wobei die eine oder die mehreren Gasaustrittsöffnungen (58) der zweiten Gasaustrittseinrichtung (56) zumindest im Wesentlichen orthogonal zu einem Abschnitt der Gehäuseinnenfläche (12) ausgerichtet sind, welcher der einen oder den mehreren Gasaustrittsöffnungen (58) der zweiten Gasaustrittseinrichtung (56) räumlich am nächsten ist, sodass das Gas zumindest im Wesentlichen orthogonal zu diesem Abschnitt der Gehäuseinnenfläche (12) des Vorrichtungsgehäuses (10) aus der einen oder den mehreren Gasaustrittsöffnungen (58) der zweiten Gasaustrittseinrichtung (56) austritt.

7. Vakuum- und/oder Druck-Trommelfiltervorrichtung gemäß einem der Ansprüche 1-4 oder 6,
wobei sich die Gaszuführleitung (50) zumindest im Wesentlichen entlang der gesamten Länge der Filtertrommel (30) erstreckt.

8. Vakuum- und/oder Druck-Trommelfiltervorrichtung gemäß einem der Ansprüche 1 bis 7,
wobei sich die eine oder die mehreren Gasaustrittsöffnungen (54, 58) der jeweiligen Gasaustrittseinrichtung (52, 56) zumindest im Wesentlichen entlang der gesamten Länge der Filtertrommel (30) erstrecken.

9. Vakuum- und/oder Druck-Trommelfiltervorrichtung gemäß einem der Ansprüche 1 bis 8, ferner mit
einem Suspensionsaufnahmebecken (70), in welchem die Suspension angeordnet ist,
wobei die Filtertrommellängsachse (L1) horizontal angeordnet ist,
wobei die Filtertrommel (30) mit einem unteren Abschnitt von ihr durch eine Öffnung (72) des Suspensionsaufnahmebeckens (70) hindurch in das Suspensionsaufnahmebecken (70) eingreift, sodass eine Außenfläche (32) der Filtertrommel (30) im Rahmen der Drehung der Filtertrommel (30) an einem ersten Vorrichtungsbereich fortlaufend in das Suspensionsaufnahmebecken (70) hinein gelangt und an einem zweiten Vorrichtungsbereich fortlaufend aus dem Suspensionsaufnahmebecken (70) heraus gelangt, und
wobei die Gaszuführleitung (50) benachbart zu dem ersten Vorrichtungsbereich angeordnet ist.

10. Vakuum- und/oder Druck-Trommelfiltervorrichtung gemäß einem der Ansprüche 1 bis 9,
wobei zumindest eine Anzahl oder alle von der einen oder den mehreren Gasaustrittsöffnungen (54, 58) der jeweiligen Gasaustrittseinrichtung (52, 56) zumindest im Wesentlichen tangential zur Filtertrommel (30) ausgerichtet sind, sodass das Gas zumindest im Wesentlichen tangential bezüglich der Filtertrommel (30) strömend aus dieser Anzahl von oder allen Gasaustrittsöffnungen (54, 58) der jeweiligen Gasaustrittseinrichtung (52, 56) austritt,
wobei die Vakuum- und/oder Druck-Trommelfiltervorrichtung optional ferner versehen ist mit einer Abdeckvorrichtung (130), welche einen Bereich der Öffnung (72) des Suspensionsaufnahmebeckens (70), durch den die Filtertrommel (30) nicht in das Suspensionsaufnahmebecken (70) eingreift, zumindest im Wesentlichen vollständig abdeckt.

11. Vakuum- und/oder Druck-Trommelfiltervorrichtung gemäß einem der Ansprüche 1 bis 10,
wobei zumindest eine Anzahl oder alle von der einen oder den mehreren Gasaustrittsöffnungen (54, 58) der jeweiligen Gasaustrittseinrichtung (52, 56) radial zumindest im Wesentlichen auf die Filtertrommellängsachse (L1) ausgerichtet sind, sodass das Gas, zumindest im Wesentlichen radial in Richtung auf die Filtertrommellängsachse (L1) gerichtet aus dieser Anzahl von oder allen Gasaustrittsöffnungen (54, 58) der jeweiligen Gasaustrittseinrichtung (52, 56) austritt.

12. Vakuum- und/oder Druck-Trommelfiltervorrichtung gemäß einem der Ansprüche 1 bis 11 zusammen mit Anspruch 2 wenn die Option mit dem Merkmal "Leitungslängsachse (L2)" gültig ist,
wobei die eine oder die mehreren Gasaustrittsöffnungen (54, 58) der jeweiligen Gasaustrittseinrichtung (52, 56) zumindest im Wesentlichen auf einer geraden Linie liegend ausgebildet sind, welche zumindest im Wesentlichen parallel zu der Filtertrommellängsachse (L1) und/oder der Leitungslängsachse (L2) verläuft.

13. Vakuum- und/oder Druck-Trommelfiltervorrichtung gemäß einem der Ansprüche 1 bis 12 zusammen mit Anspruch 2 wenn die Option mit dem Merkmal "Leitungslängsachse (L2)" gültig ist,
wobei die jeweilige Gasaustrittseinrichtung (52, 56) von einem Längsschlitz mit einer Schlitzöffnung als Gasaustrittsöffnung (54, 58) gebildet ist, welche sich zumindest im Wesentlichen entlang der gesamten Länge der Filtertrommel (30) erstreckt und welche zumindest im Wesentlichen parallel zu der Filtertrommellängsachse (L1) und/oder der Leitungslängsachse (L2) verläuft.

14. Vakuum- und/oder Druck-Trommelfiltervorrichtung gemäß einem der Ansprüche 1 bis 13 zusammen mit Anspruch 2 wenn die Option mit dem Merkmal "Leitungslängsachse (L2)" gültig ist, ferner mit
Leitfinnen (90), welche jeweils eine Finnenfläche (92) definieren und welche an und/oder benachbart zu der einen oder den mehreren Gasaustrittsöffnungen (54, 58) der jeweiligen Gasaustrittseinrichtung (52, 56) angeordnet sind und welche sich mit ihrer Finnenfläche (92) quer zur Filtertrommellängsachse (L1) und/oder der Leitungslängsachse (L2) erstrecken, um das aus den Gasaustrittsöffnungen (54, 58) austretende Gas in Richtung quer zur Filtertrommellängsachse (L1) und/oder der Leitungslängsachse (L2) zu leiten.

15. Vakuum- und/oder Druck-Trommelfiltervorrichtung gemäß einem der Ansprüche 1 bis 14, ferner mit
Umfangsleitblechen (110), welche sich in Umfangsrichtung der Filtertrommel (30) benachbart zur Außenfläche (32) der Filtertrommel (30) erstrecken und welche entlang der Filtertrommellängsachse (L1) im Abstand voneinander angeordnet sind und welche jeweils eine Umfangsleitblechfläche (112) definieren, die sich quer zur Filtertrommellängsachse (L1) erstreckt, wobei die Umfangsleitbleche (110) im Vorrichtungsgehäuse (10) drehfest sowie optional jeweilig benachbart zu einem jeweils zugeordneten Längsende der Filtertrommel (30) angeordnet sind.

## Claims

1. Vacuum and/or pressure drum filter device for filtering of a solid material from a suspension, which is formed by the solid material and a liquid, having
a device housing (10),
a rotatable filter drum (30) which defines a filter drum longitudinal axis (L1) and which is arranged in the device housing (10),
a gas supply line (50) for supplying a gas into the device housing (10),
a gas supply device for supplying the gas into the gas supply line (50), and
a peeling knife (172),
wherein the gas supply line (50) is provided with a first gas outlet means (52) which comprises one or more gas outlet openings (54) which are formed in a manner extending along the filter drum longitudinal axis (L1) and from which the gas exits into the device housing (10), and
wherein the one or more gas outlet openings (54) are arranged radially outside the filter drum (30) and on a side (172b) of the peeling knife (172), facing away from the filter drum (30).

2. Vacuum and/or pressure drum filter device according to claim 1,
wherein the gas supply line (50) is elongated,
wherein the gas supply line (50) defines a line longitudinal axis (L2) and is arranged in the device housing (10) radially outside the filter drum (30) and extends with its line longitudinal axis (L2) at least substantially in a manner parallel to the filter drum longitudinal axis (L1), and
wherein the one or more gas outlet openings (54) are formed in a manner extending along the line longitudinal axis (L2).

3. Vacuum and/or pressure drum filter device according to claim 1,
wherein the gas supply line (50) is guided from outside to a housing circumferential wall (14) of the device housing (10) and extends through the housing circumferential wall (14).

4. Vacuum and/or pressure drum filter device according to one of claims 1 to 3,
wherein the first gas outlet means (52) with its one or its more gas outlet openings (54) is formed so as to be adjacent to or in the housing circumferential wall (14) of the device housing (10).

5. Vacuum and/or pressure drum filter device according to claim 3 or according to claim 3 and 4,
wherein the gas supply line (50) defines a line longitudinal axis (L2) which extends transversely to the filter drum longitudinal axis (L1),
wherein the gas supply line (50) is formed along its line longitudinal axis (L2) with a, optionally funnel-shaped, widening parallel to the filter drum longitudinal axis (L1), which opens out into the gas outlet means (52),
wherein the first gas outlet means (52) is formed by an end-face-sided, parallelly to the filter drum longitudinal axis (L1) elongated and extending end-face-end-surface of the widening, in which end-face-end-surface the one or the more gas outlet openings (54) are formed, and
wherein, optionally, by said end-face-end-surface of the widening, a single first gas outlet opening (54) open into the device housing (10) is formed, which is, in a manner parallel to the filter drum longitudinal axis (L1), both elongated and extending.

6. Vacuum and/or pressure drum filter device according to claim 2,
wherein the gas supply line (50) is further provided with a second gas outlet means (56) which comprises one or more gas outlet openings (58) which are formed in a manner extending along the line longitudinal axis (L2) and from which the gas exits into the device housing (10),
wherein, optionally, the second gas outlet means (56) is angularly spaced, relative to the line longitudinal axis (L2), by more than 90°, and optionally by less than 180°, to the first gas outlet means (52), and
wherein, optionally, the device housing (10) defines a housing inner surface (12), wherein the one or the more gas outlet openings (54) of the first gas outlet means (52) are oriented radially at least substantially toward the filter drum longitudinal axis (L1), such that the gas exits from the one or the more gas outlet openings (54) of the first gas outlet means (52) so as to be oriented in a manner at least substantially radial toward the filter drum longitudinal axis (L1), and wherein the one or the more gas outlet openings (58) of the second gas outlet means (56) are oriented in a manner at least substantially orthogonal to a portion of the housing inner surface (12) which is spatially closest to the or the more gas outlet openings (58) of the second gas outlet means (56), such that the gas exits from the one or the more gas outlet openings (58) of the second gas outlet means (56) in a manner at least substantially orthogonal to this portion of the housing inner surface (12) of the device housing (10).

7. Vacuum and/or pressure drum filter device according to one of claims 1-4 or 6,
wherein the gas supply line (50) extends at least substantially along the entire length of the filter drum (30).

8. Vacuum and/or pressure drum filter device according to one of claims 1 to 7,
wherein the one or the more gas outlet openings (54, 58) of the respective gas outlet means (52, 56) extend at least substantially along the entire length of the filter drum (30).

9. Vacuum and/or pressure drum filter device according to one of claims 1 to 8, further having
a suspension receiving basin (70), in which the suspension is arranged,
wherein the filter drum longitudinal axis (L1) is arranged horizontally,
wherein the filter drum (30) with a lower portion thereof engages into the suspension receiving basin (70) through an opening (72) of the suspension receiving basin (70), such that an outer surface (32) of the filter drum (30), in the course of the rotation of the filter drum (30), continuously gets into the suspension receiving basin (70) at a first device area and continuously gets out of the suspension receiving basin (70) at a second device area, and
wherein the gas supply line (50) is arranged so as to be adjacent to the first device area.

10. Vacuum and/or pressure drum filter device according to one of claims 1 to 9,
wherein at least a number or all of the one or the more gas outlet openings (54, 58) of the respective gas outlet means (52, 56) are oriented in a manner at least substantially tangential to the filter drum (30), such that the gas exits from this number of or all gas outlet openings (54, 58) of the respective gas outlet means (52, 56) in a manner flowing at least substantially tangential relative to the filter drum (30),
wherein the vacuum and/or pressure drum filter device is optionally further provided with a covering device (130) which at least substantially entirely covers a portion of the opening (72) of the suspension receiving basin (70), through which the filter drum (30) does not engage into the suspension receiving basin (70).

11. Vacuum and/or pressure drum filter device according to one of claims 1 to 10,
wherein at least a number or all of the one or the more gas outlet openings (54, 58) of the respective gas outlet means (52, 56) is oriented radially at least substantially toward the filter drum longitudinal axis (L1), such that the gas exits from this number of or all gas outlet openings (54, 58) of the respective gas outlet means (52, 56) in a manner so as to be oriented at least substantially radial toward the filter drum longitudinal axis (L1).

12. Vacuum and/or pressure drum filter device according to one of claims 1 to 11 together with claim 2, when the option with the feature "line longitudinal axis (L2)" applies,
wherein the one or the more gas outlet openings (54, 58) of the respective gas outlet means (52, 56) are formed in a manner so as to lie at least substantially on a straight line which is at least substantially parallel to the filter drum longitudinal axis (L1) and/or the line longitudinal axis (L2).

13. Vacuum and/or pressure drum filter device according to one of claims 1 to 12 together with claim 2, when the option with the feature "line longitudinal axis (L2)" applies,
wherein the respective gas outlet means (52, 56) is formed by a longitudinal slit with a slit opening as gas outlet opening (54, 58) which extends at least substantially along the entire length of the filter drum (30) and which is at least substantially parallel to the filter drum longitudinal axis (L1) and/or the line longitudinal axis (L2).

14. Vacuum and/or pressure drum filter device according to one of claims 1 to 13 together with claim 2, when the option with the feature "line longitudinal axis (L2)" applies, further having
guide fins (90) which each define a fin surface (92) and which are arranged at and/or adjacent to the one or the more gas outlet openings (54, 58) of the respective gas outlet means (52, 56) and which extend with their fin surface (92) transversely to the filter drum longitudinal axis (L1) and/or the line longitudinal axis (L2) in order to guide the gas, exiting from the gas outlet openings (54, 58), in a direction transverse to the filter drum longitudinal axis (L1) and/or the line longitudinal axis (L2).

15. Vacuum and/or pressure drum filter device according to one of claims 1 to 14, further having
circumferential baffles (110) which extend in a circumferential direction of the filter drum (30) adjacent to the outer surface (32) of the filter drum (30) and which are spaced from each other along the filter drum longitudinal axis (L1) and which each define a circumferential baffle surface (112) which extends transversely to the filter drum longitudinal axis (L1), wherein the circumferential baffles (110) are arranged in the device housing (10) in a rotationally fixed manner and, optionally, respectively adjacent to a respectively associated longitudinal end of the filter drum (30).

## Revendications

1. Un dispositif de filtration à tambour sous vide et/ou sous pression destiné à filtrer une matière solide à partir d'une suspension formée par la matière solide et un liquide, comprenant
un boîtier (10),
un tambour de filtration rotatif (30) qui définit un axe longitudinal de tambour de filtration (L1) et qui est disposé dans le boîtier (10) du dispositif,
une conduite d'alimentation en gaz (50) pour acheminer un gaz dans le boîtier (10) du dispositif,
un dispositif d'alimentation en gaz pour introduire le gaz dans la conduite d'alimentation en gaz (50), et
un racloir (172),
dans lequel la conduite d'alimentation en gaz (50) est pourvue d'un premier dispositif de sortie de gaz (52) qui présente un ou plusieurs orifices de sortie de gaz (54) formés de manière à s'étendre le long de l'axe longitudinal (L1) du tambour de filtration et par lesquels le gaz s'échappe pour pénétrer dans le boîtier (10) du dispositif, et
dans lequel le ou les orifices de sortie de gaz (54) sont disposés radialement à l'extérieur du tambour de filtration (30) et sur une face (172b) du racloir (172) opposée au tambour de filtration (30).

2. Dispositif de filtration à tambour sous vide et/ou sous pression selon la revendication 1,
dans lequel la conduite d'alimentation en gaz (50) est allongée,
dans lequel la conduite d'alimentation en gaz (50) définit un axe longitudinal de conduite (L2) et est disposée radialement dans le boîtier (10) du dispositif à l'extérieur du tambour de filtration (30), l'axe longitudinal (L2) de la conduite s'étendant au moins sensiblement de manière parallèle à l'axe longitudinal (L1) du tambour de filtration, et
dans lequel le ou les orifices de sortie de gaz (54) sont formés de manière à s'étendre le long de l'axe longitudinal (L2) de la conduite.

3. Dispositif de filtration à tambour sous vide et/ou sous pression selon la revendication 1,
dans lequel la conduite d'alimentation en gaz (50) est dirigée depuis l'extérieur vers une paroi périphérique (14) du boîtier (10) du dispositif et s'étend à travers la paroi périphérique (14) du boîtier.

4. Dispositif de filtration à tambour sous vide et/ou sous pression selon l'une des revendications 1 à 3,
dans lequel le premier dispositif de sortie de gaz (52) avec son ou ses orifices de sortie de gaz (54) est formé dans ou au voisinage de la paroi périphérique (14) du boîtier (10) du dispositif.

5. Dispositif de filtration à tambour sous vide et/ou sous pression selon la revendication 3 ou selon les revendications 3 et 4,
dans lequel la conduite d'alimentation en gaz (50) définit un axe longitudinal de conduite (L2) qui s'étend transversalement à l'axe longitudinal (L1) du tambour de filtration,
dans lequel la conduite d'alimentation en gaz (50) est formée le long de son axe longitudinal de conduite (L2) avec un élargissement s'étendant parallèlement à l'axe longitudinal (L1) du tambour de filtration et présentant éventuellement une forme d'entonnoir, lequel élargissement débouche dans le dispositif de sortie de gaz (52),
dans lequel le premier dispositif de sortie de gaz (52) est formé d'une surface d'extrémité frontale de l'élargissement qui est allongée et s'étend parallèlement à l'axe longitudinal (L1) du tambour de filtration, le ou les orifices de sortie de gaz (54) étant formés dans la surface d'extrémité frontale, et
dans lequel, éventuellement, un seul premier orifice de sortie de gaz (54) ouvert sur le boîtier (10) du dispositif est formé dans ladite surface d'extrémité frontale de l'élargissement, lequel orifice est allongé et s'étend parallèlement à l'axe longitudinal (L1) du tambour de filtration.

6. Dispositif de filtration à tambour sous vide et/ou sous pression selon la revendication 2,
dans lequel la conduite d'alimentation en gaz (50) est en outre pourvue d'un deuxième dispositif de sortie de gaz (56) qui présente un ou plusieurs orifices de sortie de gaz (58) formés de manière à s'étendre le long de l'axe longitudinal (L2) de la conduite et par lesquels le gaz s'échappe pour pénétrer dans le boîtier (10) du dispositif,
dans lequel, éventuellement, le deuxième dispositif de sortie de gaz (56) est disposé à une distance angulaire supérieure à 90°, et éventuellement inférieure à 180°, du premier dispositif de sortie de gaz (52) par rapport à l'axe longitudinal (L2) de la conduite, et
dans lequel, éventuellement, le boîtier (10) du dispositif définit une surface intérieure de boîtier (12), dans lequel le ou les orifices de sortie de gaz (54) du premier dispositif de sortie de gaz (52) sont orientés de manière au moins sensiblement radiale par rapport à l'axe longitudinal (L1) du tambour de filtration, de sorte que le gaz s'échappe du ou des orifices de sortie de gaz (54) du premier dispositif de sortie de gaz (52) de manière au moins sensiblement radiale en direction de l'axe longitudinal (L1) du tambour de filtration, et dans lequel le ou les orifices de sortie de gaz (58) du deuxième dispositif de sortie de gaz (56) sont orientés de manière au moins sensiblement orthogonale par rapport à une partie de la surface intérieure (12) du boîtier qui est la plus proche dans l'espace du ou des orifices de sortie de gaz (58) du deuxième dispositif de sortie de gaz (56), de sorte que le gaz s'échappe du ou des orifices de sortie de gaz (58) du deuxième dispositif de sortie de gaz (56) de manière au moins sensiblement orthogonale par rapport à ladite partie de la surface intérieure (12) du boîtier (10) du dispositif.

7. Dispositif de filtration à tambour sous vide et/ou sous pression selon l'une des revendications 1 à 4 ou 6,
dans lequel la conduite d'alimentation en gaz (50) s'étend au moins sensiblement sur toute la longueur du tambour de filtration (30).

8. Dispositif de filtration à tambour sous vide et/ou sous pression selon l'une des revendications 1 à 7,
dans lequel le ou les orifices de sortie de gaz (54, 58) du dispositif de sortie de gaz respectif (52, 56) s'étendent au moins sensiblement sur toute la longueur du tambour de filtration (30).

9. Dispositif de filtration à tambour sous vide et/ou sous pression selon l'une des revendications 1 à 8, comprenant en outre
un bac de réception de suspension (70) dans lequel est placée la suspension,
dans lequel l'axe longitudinal (L1) du tambour de filtration est disposé horizontalement,
dans lequel une partie inférieure du tambour de filtration (30) s'engage dans le bac de réception de suspension (70) à travers une ouverture (72) du bac de réception de suspension (70), de sorte que, lorsque le tambour de filtration (30) tourne, une surface extérieure (32) du tambour de filtration (30) pénètre de manière continue dans le bac de réception de suspension (70) au niveau d'une première zone du dispositif et sort de manière continue du bac de réception de suspension (70) au niveau d'une deuxième zone du dispositif, et
dans lequel la conduite d'alimentation en gaz (50) est adjacente à la première zone du dispositif.

10. Dispositif de filtration à tambour sous vide et/ou sous pression selon l'une des revendications 1 à 9,
dans lequel au moins un certain nombre ou la totalité des orifices de sortie de gaz (54, 58) du dispositif de sortie de gaz respectif (52, 56) sont orientés de manière au moins sensiblement tangentielle par rapport au tambour de filtration (30), de sorte que le gaz s'écoule dudit certain nombre ou de la totalité des orifices de sortie de gaz (54, 58) du dispositif de sortie de gaz respectif (52, 56) de manière au moins sensiblement tangentielle par rapport au tambour de filtration (30),
dans lequel le dispositif de filtration à tambour sous vide et/ou sous pression est en outre éventuellement pourvu d'un dispositif de recouvrement (130) qui recouvre au moins presque complètement une zone de l'ouverture (72) du bac de réception de suspension (70) à travers laquelle le tambour de filtration (30) ne s'engage pas dans le bac de réception de suspension (70).

11. Dispositif de filtration à tambour sous vide et/ou sous pression selon l'une des revendications 1 à 10,
dans lequel au moins un certain nombre ou la totalité des orifices de sortie de gaz (54, 58) du dispositif de sortie de gaz respectif (52, 56) sont orientés de manière au moins sensiblement radiale par rapport à l'axe longitudinal (L1) du tambour de filtration, de sorte que le gaz s'échappe dudit certain nombre ou de la totalité des orifices de sortie de gaz (54, 58) du dispositif de sortie de gaz respectif (52, 56) de manière au moins sensiblement radiale en direction de l'axe longitudinal (L1) du tambour de filtration.

12. Dispositif de filtration à tambour sous vide et/ou sous pression selon l'une des revendications 1 à 11 prise en combinaison avec la revendication 2 lorsque la caractéristique « axe longitudinal de conduite (L2) » est valable,
dans lequel le ou les orifices de sortie de gaz (54, 58) du dispositif de sortie de gaz respectif (52, 56) sont formés de manière à se trouver au moins sensiblement sur une ligne droite qui s'étend de manière au moins sensiblement parallèle à l'axe longitudinal (L1) du tambour de filtration et/ou à l'axe longitudinal (L2) de la conduite.

13. Dispositif de filtration à tambour sous vide et/ou sous pression selon l'une des revendications 1 à 12 prise en combinaison avec la revendication 2 lorsque la caractéristique « axe longitudinal de conduite (L2) » est valable,
dans lequel le dispositif de sortie de gaz respectif (52, 56) est formé d'une fente longitudinale dont l'ouverture en fente sert d'orifice de sortie de gaz (54, 58), lequel s'étend au moins sensiblement sur toute la longueur du tambour de filtration (30) et s'étend de manière au moins sensiblement parallèle à l'axe longitudinal (L1) du tambour de filtration et/ou à l'axe longitudinal (L2) de la conduite.

14. Dispositif de filtration à tambour sous vide et/ou sous pression selon l'une des revendications 1 à 13 prise en combinaison avec la revendication 2 lorsque la caractéristique « axe longitudinal de conduite (L2) » est valable, comprenant en outre
des ailettes de guidage (90) qui définissent chacune une surface d'ailette (92) et qui sont disposées au niveau et/ou au voisinage du ou des orifices de sortie de gaz (54, 58) du dispositif de sortie de gaz respectif (52, 56) et dont la surface d'ailette (92) s'étend transversalement à l'axe longitudinal (L1) du tambour de filtration et/ou à l'axe longitudinal (L2) de la conduite, afin de guider le gaz s'échappant des orifices de sortie de gaz (54, 58) dans une direction transversale à l'axe longitudinal (L1) du tambour de filtration et/ou à l'axe longitudinal (L2) de la conduite.

15. Dispositif de filtration à tambour sous vide et/ou sous pression selon l'une des revendications 1 à 14, comprenant en outre
des plaques de guidage périphériques (110) qui s'étendent sur le pourtour du tambour de filtration (30) à proximité de la surface extérieure (32) du tambour de filtration (30) et qui sont espacées les unes des autres le long de l'axe longitudinal (L1) du tambour de filtration et qui définissent chacune une surface de plaque de guidage périphérique (112) s'étendant transversalement à l'axe longitudinal (L1) du tambour de filtration, dans lequel les plaques de guidage périphériques (110) sont solidaires en rotation dans le boîtier (10) du dispositif et, éventuellement, adjacentes respectivement à une extrémité longitudinale correspondante du tambour de filtration (30).
